# EUROPEAN PATENT APPLICATION

(11) **EP 1 270 674 A1**
(43) Date of publication of application: **02.01.2003**
(21) Application number: 01902780.4
(22) Date of filing: 06.02.2001
(51) Int. Cl.: C08L 101/00, C08K 3/00, C08K 5/00, C08K 9/00, G03G 21/00, G03G 15/02, G03G 15/16, G03G 15/08, G03G 15/20, F16C 13/00

(54) **CURABLE COMPOSITION AND CONDUCTIVE ROLLER AND CONDUCTIVE DRUM BOTH MADE FROM THE SAME**

(30) Priority: 07.02.2000 JP 2000029141; 09.02.2000 JP 2000031698; 09.02.2000 JP 2000031699; 07.03.2000 JP 2000062075; 12.05.2000 JP 2000140471; 18.05.2000 JP 2000147128; 08.11.2000 JP 2000340324
(71) Applicant: Kaneka Corporation, Osaka-shi, Osaka 530-0005 (JP)
(72) Inventor: MANABE, Takao, Shiga 520-0531 (JP); KAMITE, Jun, Otsu-shi, Shiga 520-0104 (JP); TSUNEMI, Hidenari, Kobe-shi, Hyogo 655-0032 (JP)
(74) Representative: VOSSIUS & PARTNER
(86) International application number: JP0100823
(87) International publication number: WO01059010

(57) **Abstract**

A curable composition which comprises as essential ingredients (A) an organic polymer having per molecule at least one alkenyl group capable of undergoing hydrosilylation, (B) a compound having at least two hydrosilyl groups per molecule, (C) a hydrosilylation catalyst, (D) carbon black, (E) at least one compound selected from the group consisting of epoxidized compounds, acid anhydride compounds, and ester compounds, and (F) an organotitanium compound and/or an organoaluminum compound. In the composition, the carbon black serving as a conductivity imparter has been surface-treated with the ingredients (E) and (F) by the integral blending method. The conductive material obtained by heat-curing the curable composition has regulated conductivity.

## Description

### BACKGROUND OF THE INVENTION

### Field of the Invention

The present invention relates to a curable composition and a conductive roller and a conductive drum both made from the same. More particularly, the present invention relates to a curable composition for use in production of conductive rollers such as a charging roller, developing roller, transfer roller, paper feeding roller, cleaning roller and fixing press roller to be installed in an image production apparatus using electrophotography, for example an electrophotographic copying machine, laser printer, facsimile machine and an OA system having these machines in combination, and conductive drums to be used as intermediate transfer bodies and the like to be installed in the image production apparatuses, and the aforementioned conductive roller and conductive drum.

### Description of the Related Art

Generally, in the roller and the drum described above, a rubber elastic layer is provided around a core body such as a metal shaft or a cylindrical sleeve. In providing the rubber elastic layer in the above described roller and drum, a method in which carbon black is added to a resin matrix as a conductivity imparter to obtain a conductive material is widely used for providing the rubber elastic layer with electrical conductivity. In this method, however, it is difficult to control dispersion and coagulation of carbon black in the matrix when the rubber elastic layer is provided, and the conductivity of the obtained conductive material significantly varies, and can hardly be regulated. In particular, it is extremely difficult to regulate the conductivity in the range where the material is semiconductive or more highly conductive (the range with volume resistivity larger than or equal to 10⁵ Ωcm in general). In addition, when a material with conductivity imparted thereto by adding carbon black to an additive curable composition composed of a polymer containing an alkenyl group, a compound containing a hydrosilyl group and a hydrosilylation catalyst is produced, coagulation of carbon black occurs during heat-curing of the composition, and the conductivity significantly varies, and can hardly be regulated in the composition before being cured even if the carbon black is dispersed in the matrix.

In this situation, methods in which carbon black surface-treated with an epoxy resin, a graft polymer or the like is used as a conductivity imparter to regulate the conductivity have been proposed (e.g. Japanese Patent Application Laid-Open No. 9-124969, Japanese Patent Application Laid-Open No. 10-324819, etc.). However, in any case, dedicated equipment is required for subjecting carbon black particles surface-treated with a resin, and therefore an enormous amount of equipment costs should be spent, leading to a large problem in terms of costs. In addition, even these methods are not necessarily satisfactory for more accurate regulation of the conductivity.

In addition, the method in which carbon black is surface-treated with an epoxidized compound such as epoxy resin has a problem in terms of production such that a problem associated with bonding of a cured material to a mold for use in molding may arise in forming the conductive roller and conductive drum in desired forms using the obtained curable composition.

In addition, when conductivity is provided by adding carbon black to the resin matrix, there are cases where the amount of carbon black to be added is restricted by a desired level of conductivity, and thus a satisfactory effect of reinforcement of the obtained conductive material cannot be achieved, resulting in a situation in which the conductive material lacks in mechanical strength. The method in which a reinforcing filler other than carbon black is added for enhancing the effect of reinforcement of the conductive material is also known as a general method, but in this method, the conductivity achieved by carbon black is often influenced, and thus some remedial steps are required.

### SUMMARY OF THE INVENTION

Thus, an object of the present invention is to provide at low cost a curable composition capable of being surface-treated even if carbon black is not pretreated before being mixed with a resin matrix, thereby improving dispersibility in the matrix of carbon black so that conductivity can be regulated, and a curable composition enabling the conductivity to be regulated more accurately.

Also, another object of the present invention is to provide a curable composition for which the problem associated with bonding of a cured material to a mold is alleviated when the mold is used to form the curable composition with conductivity imparted thereto by carbon black with its surface treated with an epoxidized compound, or the like.

Still another object of the present invention is to provide a conductive composition enabling the effect of reinforcement of an obtained conductive material when the conductivity of the conductive material produced from an additive curable composition is regulated by adding thereto surface-treated carbon black.

The present invention further provides a conductive roller and a conductive drum both having regulated conductivity by using the curable composition described above.

The curable composition of the present invention comprises as essential ingredients the following ingredients (A) to (F):
(A) an organic polymer having per molecule at least one alkenyl group capable of undergoing hydrosilylation;
(B) a compound having at least two hydrosilyl groups per molecule;
(C) a hydrosilylation catalyst;
(D) carbon black;
(E) at least one compound selected from the group consisting of epoxidized compounds, acid anhydride compounds and ester compounds; and
(F) an organotitanium compound and/or an organoaluminum compound.

In this curable composition, the organotitanium compound or the organoaluminum compound of ingredient (F) is reacted with and bound to a functional group such as a carboxyl group (-COOH) or hydroxyl group (-OH) existing on the surface of carbon black serving as a conductivity imparter, and through this organotitanium compound or the organoaluminum compound of ingredient (F), the surface of the carbon black is covered with the epoxidized compound, acid anhydride compound or ester compound of ingredient (E). In this way, the surface of carbon black is treated to stabilize the dispersion / coagulation state of the carbon black in the composition, whereby the conductivity of the conductive material obtained by curing the composition can easily be regulated. As described above, in the curable composition of the present invention, by treating carbon black with the (E) ingredient: at least one compound selected from the group consisting of epoxidized compounds, acid anhydride compounds, and ester compounds and the (F) ingredient: an organotitanium compound and/or an organoaluminum compound, the surface of carbon black can be treated even if the carbon black is not subjected to treatment in advance before being mixed with the composition, thus making it possible to regulate the conductivity of the obtained conductive material at low cost.

As for the compounding ratio of each ingredient in the above described curable composition, it is preferable that the amount of silicon coupled hydrogen atom of ingredient (B) is in the range of 0.5 to 5.0 equivalent with respect to the total amount of alkenyl group of the organic polymer of ingredient (A) for the added amount of ingredient (B), the added amount of ingredient (C) is in the range of from 10⁻¹ to 10⁻⁸ mol with respect to 1 mol of alkenyl group of the organic polymer of ingredient (A), the added amount of ingredient (D) is in the range of from 0.1 to 200 parts by weight with respect to 100 parts by weight of organic polymer of ingredient (A), the added amount of ingredient (E) is in the range of from 0.1 to 200 parts by weight with respect to 100 parts by weight of carbon black of the (D) ingredient, and the added amount of ingredient (F) is in the range of from 0.01 to 100 parts by weight with respect to 100 parts by weight of carbon black of the (D) ingredient.

The above described organic polymer of ingredient (A) is preferably a polymer having per molecule two or more alkenyl groups capable of undergoing hydrosilylation, and more preferably a polymer in which the alkenyl groups capable of undergoing hydrosilylation exist at the terminal of the molecule.

For the organic polymer of ingredient (A), a saturated hydrocarbon based polymer and an oxyalkylene based polymer may be used. For above described saturated hydrocarbon based polymer, an isobutylene based polymers are preferably used, and its number average molecular weight is more preferably in the range of from 1000 to 50000. Also, for the above described oxyalkylene based polymer, an oxypropylene based polymer is preferably used, and its number average molecular weight is more preferably in the range of from 500 to 50000.

For the compound having at least two hydrosilyls groups per molecule, of ingredient (B), polyorganohydrogensiloxane is preferable used.

Also, for the carbon black of ingredient (D), carbon black with a specific surface area smaller than or equal to 200 m²/g is preferably used, and at least two types of carbon black of different specific surface areas and/or particle sizes are more preferably used. In this way, by using at least two types of carbon black as ingredient (D), the conductivity of the conductive material produced from the above described curable composition can be regulated more accurately.

For the epoxidized compound, acid anhydride compound and ester compound of ingredient (E), a compound having an oxyalkylene unit in the molecule is more preferably used. Thereby, the conductivity of the conductive material obtained from the above described curable composition can be regulated more accurately.

In the case where the epoxidized compound is used as a compound of ingredient (E), a compound having per molecule 0.6 to 1.2 epoxy groups on average is preferable used. Thereby, the problem associated with bonding of a curable material to a mold for use in molding during formation of the above described curable composition.

In addition, it is preferable that as ingredient (G), hydrophobic silica, further preferably silica with pH of 5 or greater is added to the curable composition of the present invention. Thereby, a conductive material having the regulated conductivity and enhanced mechanical strength is obtained.

The curable composition of the present invention described above is produced by mixing ingredients (A), (D), (E) and (F) together, or ingredients (A), (D), (E), (F) and (G) together to treat the surface of carbon black of ingredient (D) with ingredients (E) and (F) by the integral blending method, followed by adding thereto ingredients (B) and (C), whereby the surface of the carbon black is treated to improve the dispersibility in the matrix during mixing of the ingredients even if the carbon black is not treated in advance before the ingredients are mixed together, and therefore equipment and steps for treating the surface of the carbon black before mixing are not required, thus making it possible to regulate the conductivity of the conductive material at low cost.

In addition, the conductive roller and conductive drum of the present invention are made by providing a conductive elastic layer obtained by curing the curable composition of the present invention described above around a conductive shaft and cylindrical conductive sleeve. Thereby, roller resistance or drum resistance measure after applying direct-current voltage of 100 V at 23°C and at 55% relative humidity for the conductive roller and conductive drum can be regulated so that the resistance is within the range of from 10⁶ to 10¹⁰ Ω.

The curable composition of the present invention, and the conductive roller and conductive drum produced using the same will be described further in detail below.

The conductive roller and conductive drum of the present invention are used as a roller for electrophotograph and drum for electrophotograph to be incorporated into an image production apparatus using electrophotography, such as an electrophotographic copying machine, laser printer, facsimile machine or an OA system having these machines in combination. The curable composition of the present invention is used for providing the conductive elastic layer around the conductive shaft and cylindrical conductive sleeve of the above described roller for electrophotograph and drum for electrophotograph.

The ingredient (A) for use in the curable composition of the present invention is an organic polymer having per molecule at least one alkenyl group capable of undergoing hydrosilyation. For this organic polymer, a saturated hydrocarbon based polymer or an oxyalkylene based polymer may be used.

The above described alkenyl group is not particularly limited as long as it is an alkenyl group having a carbon-to-carbon double bond that is active to hydrosilyation. The alkenyl groups include aliphatic unsaturated hydrocarbon groups such as a vinyl group, allyl group, methylvinyl group, propenyl group, butenyl group, pentenyl group and hexenyl group, cyclic unsaturated hydrocarbon groups such as a cyclopropenyl group, cyclobutenyl group, cyclopentenyl group and cyclohexenyl group, and methacryl groups. One characteristic of the curable composition of the present invention is that the hardness of the rubber like elastic material obtained after curing can easily be set at a low level, and for making significant use of this characteristic, the ingredient (A) is preferably a polymer having per molecule at least two alkenyl group capable of undergoing hydrosilyation described above. However, if the number of alkenyl groups in the polymer is too large relative to the molecular weight of ingredient (A), the cured material is stiffened, and thus good rubber elasticity can hardly obtained. In addition, it is desirable that the above alkenyl group capable of undergoing hydrosilyation is introduced at the end of the molecule of the polymer (polymer termination) of ingredient (A). When the alkenyl group exists at the polymer terminal of ingredient (A), the amount of effective network chains of the cured material finely formed by heat-curing is increased, which is preferable in the sense that a rubber elastic material of enhanced strength can easily be obtained, and so on.

The above described saturated hydrocarbon based polymer refers to a polymer having in the backbone chain no carbon-to-carbon unsaturated bond other than aromatic rings, in which repeating units forming the background chain are each constituted by a hydrocarbon group. Furthermore, in the present invention, the background chain in the polymer of ingredient (A) refers to all sections in the polymer excepting the alkenyl group capable of undergoing hydrosilylation.

The polymer constituting the backbone of the saturated hydrocarbon based polymer of ingredient (A) can be obtained, for example, by the following methods (1) and (2):
(1) An olefin based compound having 2 to 6 carbon atoms such as ethylene, propylene, 1-butene or isobutylene is used as a main monomer to carry put polymerization.
(2) A diene based compound such as butadiene or isoprene is homopolymerized, or the above olefin based compound is copolymerized with the diene based compound, followed by hydrogenating the same.

This saturated hydrocarbon based polymer is desirably an isobutylene based polymer, a hydrogenated polybutadiene based polymer or a hydrogenated polyisoprene based polymer in the sense that a functional group can easily be introduced at the terminal, the molecular weight can easily be regulated, the number of terminal functional groups can be increased, and so on.

The above isobutylene based polymer refers to an isobutylene based polymer in which monomer units constituting the backbone of the polymer are composed mainly of isobutylen units. In this case, all the monomers may be composed of isobutylene units, or the polymer may contain preferably 50% by weight or less, further preferably 30% by weight or less, particularly preferably 20% by weight or less of monomer unit capable of undergoing copolymerization with isobutylene. However, it is especially preferable that in these polymer backbones, carbon-to-carbon unsaturated bonds other than aromatic rings are not substantially contained, and the repeating units containing the backbone chain excepting the above described alkenyl group are constituted by saturated hydrocarbon, in terms of humidity resistance, weather resistance and heat resistance. Furthermore, the isobutylene based polymer for use as ingredient (A) of the curable composition may contain a small amount of, preferably 10% by weight or less of monomer unit leaving a double bond after polymerization, such as polyene compounds such as butadiene, isopurene, 1, 13-tetradecadiene, 1, 9-decadiene and 1, 5-hexadiene, as long as the object of the present invention is achieved.

The above described monomer units capable of undergoing copolymerization with isobutylene include, for example, olefins each having 4 to 12 carbon atoms, vinyl ethers, aromatic vinyl compounds, vinylsilanes and allylsilanes. Specific examples thereof include, for example, 1 butene, 2-butene, 2-methyl-1-butene, 3-methyl-1-butene, pentene, 4-methyl-1-pentene, hexane, vinyl cyclohexane, methyl vinyl ether, ethyl vinyl ether, isobutyl vinyl ether, styrene, α-methyl styrene, dimethyl styrene, p-t-butoxystyrene, p-hexenyl oxystyrene, p-allyloxystyrene, p-hydroxystyrene, β-pinene, indene, vinyl dimethyl methoxysilane, vinyl trimethylsilane, divinyl dimethoxysilane, divinyl dimethyl silane, 1, 3-divinyl-1, 1, 3, 3-tetramethyl disiloxane, trivinyl methyl silane, tetravinyl silane, allyl dimethyl methoxysilane, allyl trimethyl silane, diallyl dimethoxy silane, diallyl dimethyl silane, γ-methacryloyloxypropyl trimethoxysilane and γ-methacryloyloxypropyl methyl dimethoxysilane.

In the above described hydrogenated polybutadiene based polymer and other saturated hydrocarbon based polymers, other monomer units may be contained in addition to a monomer unit serving as a main ingredient as in the case of the above isobutylene based polymer.

The number average molecular weight (GPC method, polystyrene equivalent) of the above described saturated hydrocarbon based polymer, preferably an isobutylene based polymer, hydrogenated polyisoprene polymer based polymer or hydrogenated polybutadiene based polymer is preferably in the range of about 1000 to 50000 in terms of easiness of its handling and post-curing rubber elasticity. Crosslinking points are increased to the extent that the cured material is made brittle if the molecular weight of the saturated hydrocarbon based polymer of (A) ingredient is smaller than 1000, and viscosity is increased, thus rising the possibility that workability during treatment is worsened if the molecular weight is larger than 50000.

Methods for the saturated hydrocarbon based polymer having an alkenyl group for use as ingredient (A) in the present invention include a method in which a polymer having functional groups such as a hydroxyl group is reacted with a compound having an unsaturated group to introduce the unsaturated group into the above described polymer, as disclosed in, for example, Japanese Patent Application Laid-Open No. 3-152164 and Japanese Patent Application Laid-Open No. 7-304909. In addition, for introducing an unsaturated group into a polymer having halogen atoms, other methods include a method in which the polymer is subjected to the Friedel-Craft reaction with alkenyl phenyl ether, a method in which the polymer is subjected to the Friedel-Craft reaction with allyl trimethyl silane or the like in the presence of Lewis acid, and a method in which the polymer is subjected to the Friedel-Craft reaction with a various kinds of phenols to introduce therein a hydroxyl group, and the above described method of introducing an alkenyl group is further used in combination. Also can be used a method in which an unsaturated group is introduced during polymerization of a monomer, as disclosed in U.S. Patent No. 4316973, Japanese Patent Application Laid-Open No. 63-105005 and Japanese Application Laid-Open No. 4-288309.

Methods for producing an isobutylene based polymer containing an alkenyl group include, for example, a method in which an alkenyl group is introduced into an isobutylene based polymer having a covalent Cl group. Specific methods for introducing an alkenyl group into an isobutylene based polymer having a covalent Cl group are not particularly limited, but they include, for example, a method in which the Friedel-Craft reaction is carried out between an alkenyl phenyl ether and the Cl group of an isobutylene based polymer, a method in which the Cl group of an isobutylene based polymer is subjected to a substitution reaction with aryl trimethyl silane or the like in the presence of Lewis acid, and a method in which the Friedel-Craft reaction is carried out between a various kinds of phenols and the Cl group of an isobutylene based polymer to introduce a hydroxyl group, followed by further carrying out a reaction for introducing an alkenyl group.

In addition, another method for producing the isobutylene based polymer containing an alkenyl group of ingredient (A) is a method in which the alkenyl group is introduced during polymerization of the polymer. Methods for introducing the alkenyl group during polymerization of the polymer include, for example, a method in which aryl trimethyl silane is added to a reaction system for cationic polymerization of cationic-polymerizable monomer containing isobutylene in the presence of an initiator, a chain transfer agent and a catalyst to produce an isobutylene based polymer having allyl terminals. Here, for example, a compound having a carbon atom bound to a halogen atom and the carbon of an aromatic ring, or a compound having a halogen atom bound to a tertiary carbon atom may be used as an initiator also serving as a chain transfer agent. For the catalyst, a Lewis acid may be used. In a similar way, a method in which a conjugated diene such as 1, 9-decadiene or a alkenyloxystyrene such as p-hexenyloxystyrene is added to a polymerization reaction system can be used. Here, the Lewis acid capable of being used as a cationic catalyst is a compound expressed by the general formula of MX'ₙ (M represents a metal atom, and X' represents ahalogen atom) (e.g. BCl₃, Et₂AlCl, EtAlCl₂, AlCl₃, SnCl₄, TiCl₄, VCl₅, FeCl₃, BF₃, etc.), but should not be limited thereto. Of these Lewis acids, BCl₃, SnCl₄, BF₃ and the like are preferable, and TiCl₄ is further preferable. The amount of Lewis acid to be used is preferably 0.1 to 10 times, further preferably 2 to 5 times larger than that of the initiator also serving as a chain transfer agent in the number of moles.

In addition, the above described oxyalkylene based polymer for use as ingredient (A) of the curable composition of the present invention refers to a polymer in which 30% or more, preferably 50% or more of units constituting the backbone is composed of the oxyalkylene unit, and units contained in addition to the oxyalkylene unit include units from compounds having at least two active hydrogen atoms, which are used as a starting material when a polymer is produced, for example ethylene glycol-bisphenol based compounds, glycerin, trimethylol propane and pentaerythritol. Furthermore, the oxyalkylene unit is not necessarily of one type, but may be a copolymer (including a graft polymer) constituted by ethylene oxide, propylene oxide, butylene oxide and the like. In addition, in the case where the curable composition is used as a curable composition for forming the conductive elastic layer of the roller and drum for electrophotograph, oxypropylene, oxybutylene or the like of relatively low susceptibility to water is preferably used as a main chain backbone in terms of environmental stability of electric properties, and an oxypropylene based polymer having oxypropylene as a main chain backbone is particularly preferable, for the oxyalkylene based polymer of ingredient (A).

The number average molecular weight (GPC method, polystyrene equivalent) of the above described oxyalkylene based polymer, preferably an oxypropylene based polymer is preferably in the range of about 500 to 50000 in terms of easiness of its handling and post-curing rubber elasticity. Crosslinking points are increased to the extent that the cured material is made brittle if the molecular weight of the oxyalkylene based polymer of (A) ingredient is smaller than 500, and viscosity is increased, thus rising the possibility that workability during treatment is worsened if the molecular weight is larger than 50000.

The ingredient (B) for use in the present invention is used as a curing agent, and is not limited as long as it contains two or more hydrosilyl groups (silicon atom bound hydrogen atom) per molecule. Here, the hydrosilyl group is a group having a Si-H bond, but in this invention, if two hydrogen atoms (H) are bound to the same silicon atom (Si), the number of hydrosilyl groups is considered as two. For the ingredient (B), polyorganohydrogensiloxane containing on average at least two hydrosilyl groups per molecule is preferred one. If the number of hydrosilyl groups contained in the molecule of polyorganohydrogensiloxane of (B) ingredient is smaller-than two on average, the cured material cannot fully be crosslinked, thus making it difficult to obtain rubber elasticity. The polyorganohydrogensiloxane as used here is a siloxane compound having a hydrocarbon group or hydrogen atom on the silicon atom. Specific examples of polyorganohydrogensiloxane include compounds having chain and cyclic structures expressed by the following general formulas (1) to (3), and compounds having two or more of these units, expressed by the following general formulas (4) to (6). 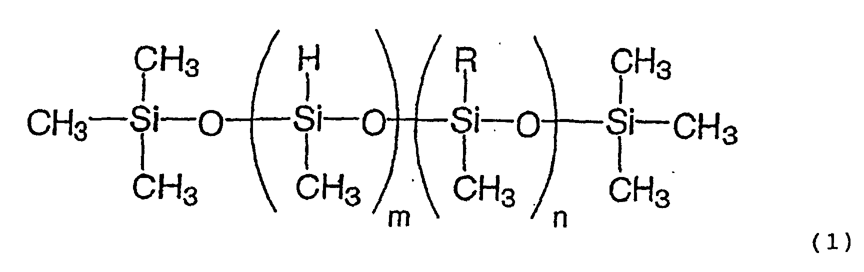 (In the above formula, 2<m+n≤50, 2<m and 0≤n hold, and R represents a hydrocarbon with the backbone chain having 2 to 20 carbon atoms, which may contain one or more phenyl groups.) 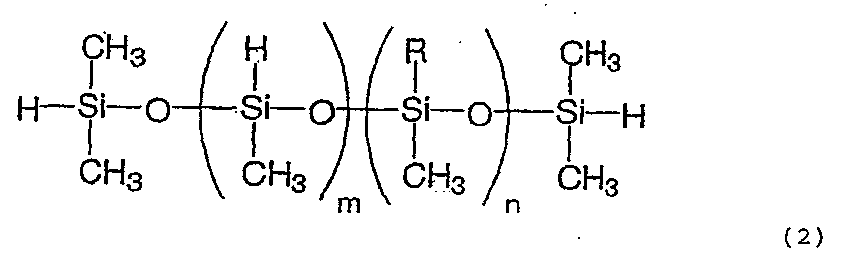 (In the above formula, 0<m+n≤50, 0<m and 0≤n hold, and R represents a hydrocarbon with the backbone chain having 2 to 20 carbon atoms, which may contain one or more phenyl groups.) 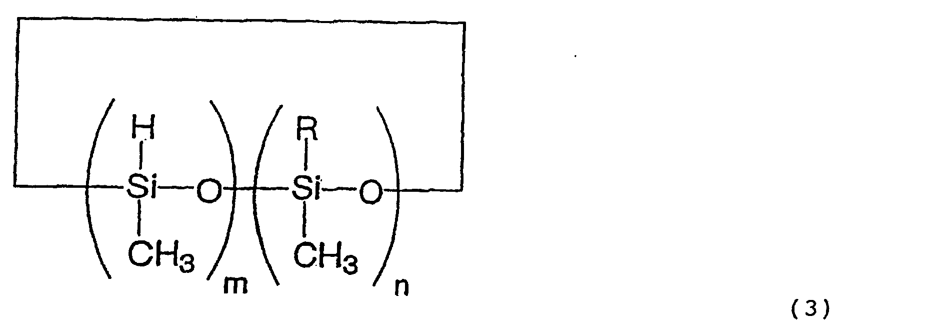 (In the above formula, 3<m+n≤20, 2<m≤19 and 0≤n<18 hold, and R represents a hydrocarbon with the backbone chain having 2 to 20 carbon atoms, which may contain one or more phenyl groups.) 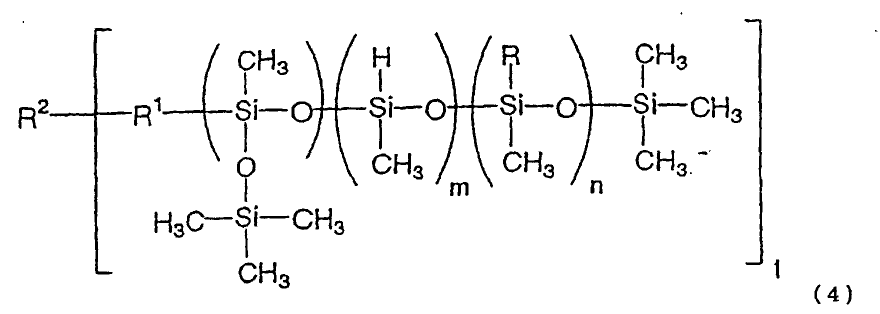 (In the above formula, 1<m+n≤50, 1≤m and 0≤n hold, and R represents a hydrocarbon with the backbone chain having 2 to 20 carbon atoms, which may contain one or more phenyl groups. 2≤1 holds, R² represents a bivalent, tervalent or quadrivalent organic group, and R¹ represents a bivalent organic group. However, R¹ may be absent depending on the structure of R².) 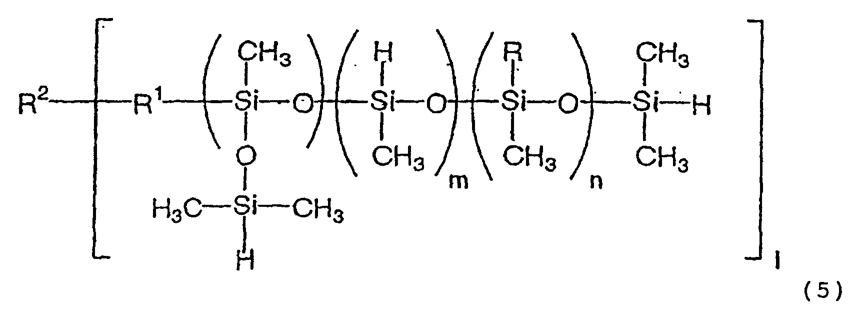 (In the above formula, 0<m+n≤50, 0≤m and 0≤n hold, and R represents a hydrocarbon with the backbone chain having 2 to 20 carbon atoms, which may contain one or more phenyl groups. 2≤l holds, R² represents a bivalent, tervalent or quadrivalent organic group, and R¹ represents a bivalent organic group. However, R¹ may be absent depending on the structure of R².) 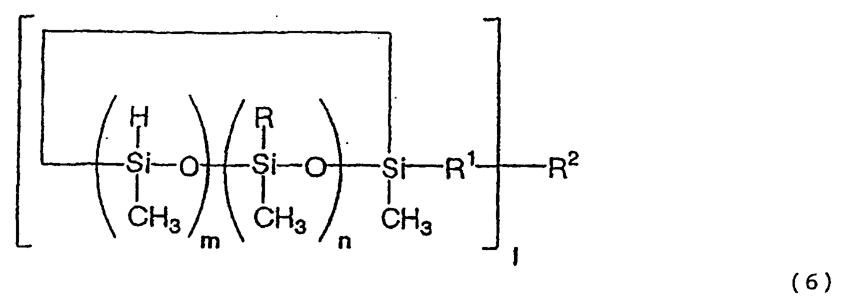 (In the above formula, 3<m+n≤50, 1≤m and 0≤n hold, and R represents a hydrocarbon with the backbone chain having 2 to 20 carbon atoms, which may contain one or more phenyl groups. 2≤l holds , R² represents a bivalent, tervalent or quadrivalent organic group, and R¹ represents a bivalent organic group. However, R¹ may be absent depending on the structure of R².)

In addition, for the ingredient (B), a compound that is well compatible with other ingredients in the composition and has good dispersion stability in the composition is preferable. Particularly, in the case where the viscosity of the whole composition is low, phase separation may occur resulting in imperfect curing if a compound less compatible with other ingredients is used as ingredient (B). Furthermore, a filler having a small particle size such as fine particles of silica may be blended in the composition as a dispersing agent. Specific examples of compounds of which compatibility with other ingredients and dispersion stability in the composition are relatively good include compounds expressed by the following formulas (7) and (8). 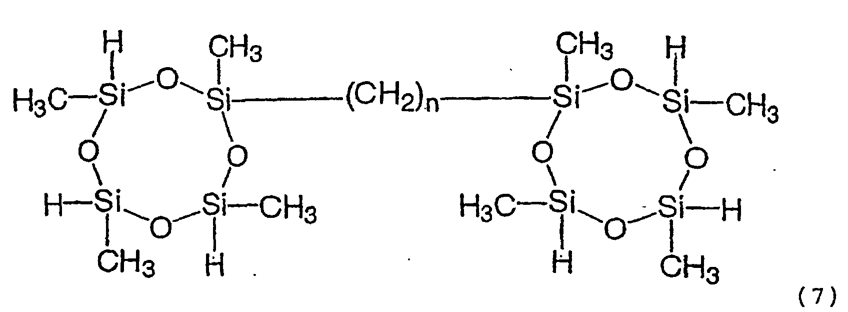 (In the above formula, n represents an integer number of 6 to 12.) 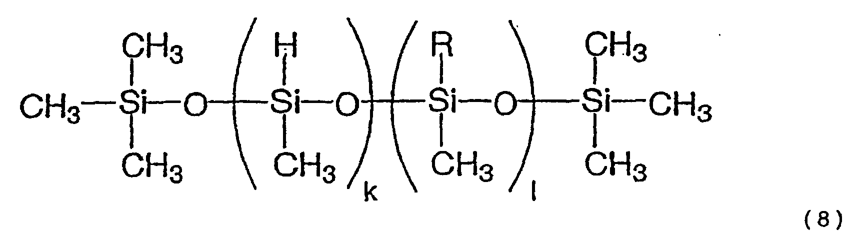 (In the above formula, 2<k<10 and 0<l<5 hold, and R represents a hydrocarbon group having 8 carbon atoms.)

Preferably, the amount of ingredient (B) to be used in the curable composition of the present invention is such that the amount of silicon atom bound hydrogen atom of ingredient (B) is in the range of from 0.5 to 5.0 equivalent with respect to the total amount of alkenyl group of ingredient (A). In addition, if the organic polymer of ingredient (A) is a saturated hydrocarbon based polymer, the amount of ingredient (B) to be used is preferably such that the amount of silicon atom bound hydrogen atom of ingredient (B) is in the range of from 0.8 to 5.0 equivalent with respect to the total amount of alkenyl group of ingredient (A). If the amount of silicon atom bound hydrogen atom of ingredient (B) is smaller than 0.8 equivalent with respect to the above total amount of alkenyl group of the saturated hydrocarbon based polymer of ingredient (A), crosslinking may be unsatisfactorily done. Also, if the amount of silicon atom bound hydrogen atom of ingredient (B) is larger than 5.0 equivalent, a problematic situation may arise in which properties are considerably changed due to the influence of silicon bound hydrogen atoms remaining after curing. When it is desired to curb this influence, in particular, the amount of ingredient (B) to be used is preferably such that the amount of silicon atom bound hydrogen atom of ingredient (B) is in the range of from 1.0 to 2.0 equivalent. If the organic polymer of ingredient (A) is an oxyalkylene based polymer, the amount of ingredient (B) to be used is preferably such that the amount of silicon atom bound hydrogen atom of ingredient (B) is in the range of from 0.5 to 3.0 equivalent with respect to the total amount of alkenyl group of ingredient (A). If the amount of silicon atom bound hydrogen atom of ingredient (B) is smaller than 0.5 equivalent with respect to the above total amount of alkenyl group of the oxyalkylene based polymer of ingredient (A), crosslinking may be unsatisfactorily done. Also, if the amount of silicon atom bound hydrogen atom of ingredient (B) is larger than 3.0 equivalent, a problematic situation may arise in which properties are considerably changed due to the influence of silicon bound hydrogen atoms remaining after curing. When it is desired to curb this influence, in particular, the amount of ingredient (B) to be used is preferably such that the amount of silicon atom bound hydrogen atom of ingredient (B) is in the range of from 0.7 to 1.5 equivalent.

The hydrosilylation catalyst constituting the ingredient (C) for use in the present invention is not particularly limited, and any hydrosilylation catalyst may be used. Specific examples thereof include platinic chloride, single platinum, alumina, silica, and solid platinum carried on a carrier such as carbon black; platinum-vinyl siloxane complexes {e.g. Ptₙ (ViMe₂SiOSiMe₂Vi)ₙ, Pt[(MeViSiO)₄]ₘ}; platinum-phosphine complexes {e.g. Pt (PPh₃)₄, Pt (PBu₃)₄}; platinum-phosphite complexes {e.g. Pt [P(OPh)₃]₄, Pt [P(OBu)₃]₄} (in the above formula, Me represents a methyl group, Bu represents a butyl group, Vi represents a vinyl group, Ph represents a phenyl group, and n and m represent integer numbers, respectively), Pt (acac)₂, the platinum-hydrocarbon complex described in U.S. Patent No. 3159601 and No. 3159662 specifications, and the platinum alcholate catalyst described in U.S. Patent No. 3220972 specification (Lamoreaux, et al.). In addition, examples of catalysts other than platinum compounds include RhCl (PPh₃)₃, RhCl₃, Rh/Al₂O₃, RuCl₃, IrCl₃, FeCl₃, AlCl₃, PdCl₂·2H₂O, NiCl₂ and TiCl₄. For these catalysts, one type of catalyst may be used alone, or two or more types of catalysts may be used in combination. Preferable are platinic chloride, platinum-olefin complexes, platinum-vinyl siloxane complexes, Pt(acac)₂ and the like in terms of catalyst activity. The amount of catalyst to be used is not particularly limited, but the appropriate amount is in the range of from 10⁻¹ to 10⁻⁸ mol with respect to 1 mol of alkenyl group in ingredient (A). The amount of catalyst to be used is preferably in the range of from 10⁻² to 10⁻⁶ mol with respect to 1 mol of alkenyl group in ingredient (A). In addition, the hydrosilylation catalyst is generally expensive and corrosive, and may produce a large amount of hydrogen gas to cause the cured material to be expanded, and therefore it is desired that the amount of the hydrosilylation catalyst to be used is limited to 10⁻¹ mol or smaller with respect to 1 mol of alkenyl group in ingredient (A).

The carbon black of ingredient (D) for use in the present invention is an ingredient for imparting conductivity to the cured material obtained from the curable composition of the present invention having as a main ingredient an organic polymer of (A) ingredient having an alkenyl group make the cured material into a conductive material. Examples of carbon black include furnace black, acetylene black, lamp black, channel black, thermal black and oil black. The type, particle size and the like of such carbon black are not limited. For the carbon black, one type of carbon black may be used alone, or two or more types of carbon black may be used in combination. In the present invention, the type of carbon black to be used is not particularly limited, but carbon black having preferably a specific surface area of 200 m²/g or smaller, more preferably 150 m²/g is used. If the specific surface area is too large, it is made difficult to satisfactorily carry out surface treatment, thus making it impossible to perform control to maintain a desired range of conductivity. In addition, the conductivity of the cured material obtained by curing the curable composition of the present invention depends considerably on the specific surface area of carbon black, and if the type and amount of surface treatment for carbon black are fixed, the conductivity is increased as the specific surface area becomes larger. Furthermore, specific surface areas of carbon black in the present invention are values determined by the BET method using nitrogen absorption.

In addition, by using at least two different types of carbon black in combination, the conductivity can be adjusted more accurately. The term "different types of carbon black" used herein refer to different types associated with different processes for production and different raw materials (e.g. furnace black and acetylene black, etc.), and different property values of carbon black such as the specific surface area, particle size and pH. In the case where two or more types of carbon black are used, those of different specific surface areas and particle sizes are preferably used in adjusting more accurately the conductivity of the cured material. This is probably because the states of the surfaces of carbon black treated with ingredients (E) and (F) described later are different if the specific surface areas and particle sizes of carbon black are different.

The added amount of carbon black of ingredient (D) is preferably in the range of from 0.1 to 200 parts by weight, further preferably from 1 to 100 parts by weight with respect of 100 parts by weight of polymer of ingredient (A). The conductivity of the obtained conductive material tends to vary if the added amount of carbon black is too small, and the fluidity of the curable composition is compromised leading to reduction in processability, and the hardness of the obtained conductive material is excessively increased if the amount of carbon black is too large. Furthermore, the hydrosilylation reaction may be hindered depending on the type and amount of carbon black to be used, and therefore the impact of carbon black on the hydrosilylation reaction should also be considered.

The epoxidized compound, acid anhydride compound and ester compound of ingredient (E) of the present invention regulate the achieved conductivity in impartment of conductivity by carbon black. Functional groups such as a carboxyl group (-COOH) and hydroxyl group (-OH) exist on the surface of the carbon black particle, and this ingredient (E) covers the surface of carbon black through an organotitanium compound or organoaluminum compound as ingredient (F). It can be considered that the surface of carbon black is treated in this way to stabilize the dispersion and coagulation of carbon black in the matrix, thus making it possible to regulate the conductivity of the cured material. The curable composition with conductivity regulated by carbon black in this way is particularly suitable for obtaining a conductive material with its conductivity in the range where the material is semiconductive or more highly conductive (the range with volume resistivity larger than or equal to 10⁵ Ωcm in general).

The epoxidized compound, acid anhydride compound and ester compound for use as ingredient (E) are not particularly limited as long as it has any of an epoxy group, an acid anhydride unit and an ester group in the ratio of 0.6 per molecule on average.

For the epoxidized compound, one that is widely used as an epoxy resin may be used, a compound having an epoxy group such as a glycidyl group, alicyclic epoxy group or aliphatic epoxy group may be used, and an epoxy resin containing any of these epoxy groups may be used. In addition to thereto, a silane coupling agent having an epoxy group, or a monofunctional epoxy compound may suitably be used. Furthermore, for the epoxidized compound of ingredient (E), a compound having per molecule 0.6 to 1.2 epoxy groups on average is preferably used. Here, if the number of epoxy groups contained in the molecule is calculated from the epoxy equivalent (g/eq), it can be determined by dividing by the epoxy equivalent the average molecular weight of the epoxidized compound to be used, and the acceptable range of the value determined in this way is of from 0.6 to 1.2. If the number of epoxy groups that the epoxidized compound of ingredient (E) has per molecule is larger than 1.2, there may be cases where the compound is reacted with the surface of the mold to become adhesive, thus rising a problem in terms of production. Also, if the number of epoxy groups that the epoxidized compound of ingredient (E) has per molecule is smaller than 0.6, the effect of regulating conductivity is reduced.

The acid anhydride compound of ingredient (E) is not particularly limited as long as an acid anhydride compound is contained in the molecule, the examples of this compound include maleic anhydride, copolymers of maleic anhydride and other compound, phthalic anhydride, phthalic methyl tetrahydro anhydride, phthalic hexahydro anhydride, polyadipic anhydride, phthalic tetrahydro anhydride and ethylene glycol bistrimellitate. Examples of the above described copolymer of maleic anhydride and other compound include copolymers of maleic anhydride and styrene, and copolymers of maleic anhydride and styrene and allyl terminated polyoxy alkylene (e.g. trade name: Maliarim manufactured by NOF Corporation), and in particular, the copolymer of maleic anhydride and styrene and allyl terminated polyoxy alkylene may suitably used because it is a liquid material and thus can easily be handled, and so on.

The ester compound as ingredient (E) is not particularly limited as long as an ester group is contained in the molecule. Examples of this ester compound include various kinds of ester compounds constituted by monovalent or polyvalent carbonic acids such as acetic acid, propionic acid, butyric acid, lauric acid, stearic acid, cyclohexane carbonic acid, benzoic acid, malonic acid, succinic acid, maleic acid, fumaric acid, adipic acid, phthalic acid, terephthalic acid and trimellitic acid, and organic hydroxyl compounds having one or more hydroxyl groups such as methanol, ethanol, n-propanol, isopropanol, n-butylalcohol, sec-butyl alcohol, tert-butyl alcohol, n-octyl alcohol, lauryl alcohol, stearyl alcohol, cyclohexanol, ethylene glycol, propylene glycol, 1, 3-propanediol, 1, 3-butanediol, 1, 4-butanediol, 1, 6-hexanediol, trimethylolepropane, glycerin, pentaerythritol, phenol, 2-naphthol, catechol and bisphenol A. However, the above specific examples are not intended for specifying a production method such that the ester compound is synthesized from the above described carbonic acid and organic hydroxyl compound, but simply indicates ester compounds constituted by various kinds of carbonic acids and organic hydroxyl compounds. Also, the ester compound for use in the present invention as ingredient (E) should not be limited to the specific examples described above.

In addition, the compound of ingredient (E) is preferably a compound having an oxyalkylene unit in the molecule. By using the oxyalkylene based compound having an oxyalkylene unit in the molecule as ingredient (E), the surface of carbon black is covered and treated through the organotitanium compound and organoaluminum compound of ingredient (F) to stabilize the states of dispersion and coagulation of carbon black, and in regulating the conductivity in the cured material, the oxyalkylene unit serving as a conductive unit exists near the carbon black even after the carbon black is covered because the compound with which the carbon black is covered contains oxyalkylene, and the type and added amount of ingredient (E) are changed, or two types thereof are used in combination, thereby making it possible to widen the range in which the conductivity of the cured material is regulated.

The above described oxyalkylene based compound as ingredient (E) refers to a compound in which 10% or more, preferably 30% or more of units constituting the backbone chain is composed of the oxyalkylene unit, and components contained in addition to the oxyalkylene unit are not particularly limited. Examples of the oxyalkylene unit include ethylene oxide, propylene oxide, butylene oxide, and copolymers of these oxyalkylene units (including graft polymers). For the oxyalkylene based compound as ingredient (E), compounds having as a reactive site epoxy groups such as a glycidyl group, alicyclic epoxy group and aliphatic epoxy group, acid anhydride groups such as maleic anhydride, copolymers of maleic anhydride and other compounds, phthalic anhydride, methyl tetrahydrophthalic anhydride hexahydrophthalic anhydride, polyadipic anhydride, tetrahydrophthalic anhydride and ethylene glycol bistrimellitate, and ester groups such as methyl ester, ethyl ester, butyl ester, oleyl ester and stearyl ester. Examples of the above described copolymers of maleic anhydride and other compounds include copolymers of maleic anhydride and styrene, and copolymers of copolymers of maleic anhydride and styrene and allyl terminated polyoxy alkylene (e.g. trade name: Maliarim manufactured by NOF Corporation), and in particular, the copolymers of maleic anhydride and styrene and allyl terminated polyoxy alkylene are suitable because it is a liquid material and thus can easily be handled, and so on.

For the epoxidized compounds, acid anhydride compounds and ester compounds as ingredient (E) described above, one type may be used alone, or two or more types may be used in combination.

The added amount of ingredient (E) is preferably in the range of from 0.1 to 200 parts by weight, further preferably in the range of from 0.5 to 100 parts by weight, and particularly preferably in the range of from 1 to 50 parts by weight with respect to 100 parts by weight of ingredient (D). If the added amount of ingredient (E) is too small compared to that of carbon black of ingredient (D), a satisfactory effect of surface treatment of carbon black cannot be achieved, and if the amount is too large, problems such as bleeding may arise.

The organotitanium compound and organoalumimum as ingredient (F) are essential for covering carbon black of ingredient (D) with ingredient (E) to regulate the conductivity of the obtained cured material. Specifically, the surface of carbon black of ingredient (D) is covered with the epoxidized compound, acid anhydride compound or ester compound of ingredient (E) through this ingredient (F).

Examples of the above described organotitanium compound include, but not limited to, tetra (n-butoxy) titanium, tetra (i-propoxy) titanium, tetra (stearoxy) titanium, di-i-propoxy-bis (acetyl acetonate) titanium, i-propoxy (2-ethylhexane diolate) titanium, di-i-propoxy-diethylacetoacetate titanium, hydroxy-bis (lactate) titanium, i-propyltriisostearoil titanate, i-propyl-tris (dioctyl pyrophosphate) titanate, (tetra-i-propyi)-bis (dioctyl phosphite) titanate, tetraoctyl-bis (ditridecyl phosphite) titanate, bis (dioctyl pyrophosphate) oxyacetate titanate, bis- (dioctyl pyrophosphate) ethylene titanate, i-propyl trioctanoyl titanate and i-propyl dimethacryl-i-stearoyl titanate.

Also, examples of the above described organoaluminum compound include, but not limited to, aluminum butoxide, aluminum isopropoxide, aluminum acetyl acetonate, aluminum ethyl acetoacetonate and acetoalkoxy aluminum diisopropylate.

For the organotitanium compound and organoaluminum compound of ingredient (F), one type may be used alone, or two or more types may be used in combination.

The added amount of ingredient (F) is preferably in the range of from 0.01 to 100 parts by weight, further preferably in the range of from 0.05 to 50 parts by weight, particularly preferably in the range of from 0.1 to 20 parts by weight with respect to 100 parts by weight of ingredient (D). In addition, the hydrosilylation reaction may be hindered depending on the type and added amount of ingredient (F) to be used, and therefore the impact of ingredient (F) on the hydrosilylation reaction should also be considered.

Also, a softener and plasticizer may be added to the curable composition of the present invention for the purpose of regulating viscosity and stiffness. The amount of softener and plasticizer to be used is preferably 150 parts by weight or smaller with respect to 100 parts by weight of ingredient (A). If the amount of these additives exceeds the above level, problems of bleeding and the like may arise.

In addition, a storage stability modifier may be used in the curable composition of the present invention for the purpose of improving the storage stability. This storage stability modifier may be any stabilizer known as a storage stabilizer for ingredient (B) of the present invention, which is capable of achieving an initial goal, and is not particularly limited. Specifically, compounds containing aliphatic unsaturated bonds, organophosphorus compounds, organosulfur compounds, nitrogenized compounds, tin based compounds, organic peroxides and the like may be used. More specific examples of storage stability modifiers include, but not limited to, 2-benzothiazorylsulfide, benzothiazole, thiazole, dimethyl acetylene dicarboxylate, diethyl acetylene dicarboxylate, butylated hydroxytoluene, butylated hydroxyanisole, vitamin E, 2-(4-morphodinyl dithio) benzothiazole, 3-methyl-1-butene-3-ol, organosiloxane containing an acetylene unsaturated group, organosiloxane containing an ethylene unsaturated group, acetylene alcohol, 3-methyl-1-butyl-3-ol, diallyl fumarate, diallyl maleate, diethyl fumarate, diethyl maleate, dimethyl maleate, 2-pentene nitrile and 2, 3-dichloropropene.

In addition, various kinds of fillers, various kinds of functionality adding agents, anti-oxidants, ultraviolet absorbers, pigments, surfactants, solvents and silicon compounds may be added as appropriate to the curable composition of the present invention. Specific examples of the above described fillers include fine silica powders, calcium carbonate, clay, talc, titanium oxide, zinc white, silious earth and barium sulfate. Of these fillers, fine silicon powders are preferable. Particularly, in the curable composition of the present invention, addition in advance of hydrophobic silica provided with hydrophobicity enhances the action to improve the strength of the conductive material obtained by heat-curing this curable composition in a preferred way, and prevents any influence on regulation of the conductivity achieved by treating the surface of carbon black with ingredients (D), (E) and (F), which is particularly preferable. In addition, the above described silica of ingredient (G) is preferably one having pH of 5 or greater.

The above described hydrophobic silica of ingredient (G) is an ingredient for supplementing the effect of reinforcement of the conductive material that will be insufficiently achieved by carbon black alone. The pH of silica mentioned herein means a value obtained by measuring by a glass electrode pH meter a solution with about 5% of silica dispersed in water of which pH is already adjusted to about 7 using caustic soda. If the above described silica cannot be dispersed in water, a solution with about 5% of silica dispersed in a mixture obtained by adding methanol or ethanol of which amount is almost same as that of the above described water having pH adjusted to about 7 may be prepared to measure the pH of silica. Because the regulation of conductivity by carbon black of ingredient (D) and the above described ingredients (E) and (F) may be influenced depending on the state of surface of silica to be used, it is important that the surface of silica is provided with hydrophobicity, and it is preferable that a silica filler with pH of 5 or greater, particularly 7 or greater is used in the present invention. If a silica filler with pH of 5 or smaller, not provided with hydrophobicity is used, the treatment of the surface of carbon black is influenced, and therefore the resistance is increased or variations in resistance become larger.

The added amount of silica of ingredient (G) is preferably in the range of from 0.1 to 100 parts by weight, further preferably in the range of from 1 to 50 parts by weight with respect to 100 parts by weight of polymer of ingredient (A). if the added amount of ingredient (G) is too large, the fluidity of the composition is compromised resulting in reduction in processability, and the stiffness of the obtained conductive material is increased, and if the amount is too small, the effect of reinforcement is unsatisfactorily achieved. Furthermore, the hydrosilylation reaction may be hindered depending on the type or added amount of silica to be used, and therefore the impact of silica on the hydrosilylation reaction should also be considered. For the silica of ingredient (G), one type may be used alone, or two or more types may be used in combination.

For the curable composition of the present invention described above, the surface of carbon black of ingredient (D) serving as a conductivity imparter is pretreated with ingredients (E) and (F) made to coexist in the composition by the integral blending method, and thus the conductivity of the obtained conductive material is regulated. That is, in the composition containing carbon black obtained by mixing together the organic polymer having an alkenyl group of ingredient (A), the carbon black of ingredient (D), the epoxidized compound, acid anhydride compound and ester compound of ingredient (E), the organotitanium compound and organoaluminum compound of ingredient (F), and the silica of ingredient (G), the surface of carbon black is treated by effects of the above described ingredients (E) and (F). The treatment of the surface of carbon black by the integral blending method mentioned herein means a method in which a roll, mixer or a mixing process such as mixing by hand in some cases is used to sufficiently mix the ingredients together to treat the surface of carbon black without treating the surface of carbon black before it is blended in the organic polymer of ingredient (A). Therefore, surface treatment can be conducted conveniently without providing a specific surface treatment apparatus and steps for achieving the purpose of surface treatment, thus bringing about a significant advantage in terms of costs.

The process for treating the surface of carbon black by the integral blending method will be described using an example. First, the carbon black of ingredient (D) and the organic polymer having an alkenyl group of ingredient (A), and further the hydrophobic silica of ingredient (G) as necessary are added and are mixed together using a triple roll, and then ingredients (E) and (F) serving as surface treatment agents for carbon black are added thereto and mixed sufficiently. At this time, for covering the surface of carbon black more effectively, ingredients (E) and (F) may also be added when mixing by the triple roll is carried out, and the mixture after being mixed may be subjected to a thermal treatment. In addition, at the time when the carbon black of ingredient (D) or the like is mixed with the organic polymer of ingredient (A), a dispersant may be used for improving dispersibility. In this way, the carbon black of ingredient (D) with its surface treated with ingredients (E) and (F) is dispersed in the organic polymer of ingredient (A) serving as a matrix resin. By adding ingredients (B) and (C) in this state, the curable composition of the present invention can be obtained.

Then, the curable composition of the present invention described above is heat-cured, whereby a conductive material can be obtained. In this case, the curable composition of the present invention is molded and heat-cured by a known method to form a conductive molded product. For example, the curable composition of the present invention is placed in a mold having a molding space of desired shape such as a roller, and is thereafter heated, whereby a conductive molded product of desired shape can be obtained. Specific molding methods may include, for example, liquid injection molding, extrusion molding and press molding, but the liquid injection molding is preferable in the sense that the composition is liquid and productivity is enhanced. Because the curable conductive composition of the present invention exhibits excellent storage stability even at a relatively high temperature, it can be heated and handled at a lower viscosity. Thus, the curable composition of the present invention is suitable for liquid injection molding at a high temperature.

The curable composition of the present invention is capable of being cured very quickly, and thus is advantageous in conducting line production because it is cured by the addition reaction of the hydrosilyl group (Si-H group) of the compound of ingredient (B) using a precious metal that is the hydrosilylation catalyst of ingredient (C). The temperature at which the composition is cured is preferably in the range of from 80 to 180°C. At a temperature lower than 80°C, the curing reaction hardly progresses because the composition is excellent in storage stability, but when the temperature rises to about 80°C or higher, the hydrosilylation reaction rapidly progresses, thus making it possible to a cured material in short time.

The composition comprising as essential ingredients the ingredients (A) to (F), and further having added thereto the ingredient (G) and other ingredients to be used as necessary as described above can be formed into a various kinds of rollers and drums for use in electronic copiers, printers or the like by carrying out cast molding, injection molding, extrusion molding or the like with a mold in which a conductive shaft composed of a metal shaft made of SUS is placed at the center, for example, and heat-curing the composition at a temperature of 80 to 180°C, preferably 100 to 160°C for 10 seconds to 1 hour, preferably 1 to 40 minutes. When the composition is heat-cured, the composition may be post-cured after being semi-cured instead of completely curing the composition in a stroke. In addition, one or more layers may be provided outside the conductive elastic layer formed from the cured material of the above described curable composition as required. For example, the surface layer can be provided by applying a resin for surface formation from above the conductive elastic layer by spray coating, roll coat coating or dip coating, and then drying and curing the resin at a predetermined temperature.

The curable composition of the present invention is suitable as a material for producing the conductive roller, conductive drum and the like, and is specifically suitable for a charging roller, developing roller, transfer roller, paper feeding roller, cleaning roller, fixing press roller, intermediate transfer drum and the like. The curable composition of the present invention allows the conductivity of the cured material to be easily regulated to the range of conductivity with volume resistivity of 10⁵ Ω or greater, and is suitable as a material for the conductive roller and conductive drum, and is capable of regulating the roller resistance and drum resistance of the conductive roller and conductive drum to the range of volume resistivity of from 10⁶ to 10¹⁰ Ω. The roller resistance and drum resistance mentioned herein refer to a value determined by applying a direct voltage of 100 V at 23°C and 55% relative humidity. Specifically, the roller resistance is an electric resistance value determined by applying 500 g of load to each of the both ends of the conductive shaft of the roller (applying 1 kg of load in total) along the direction of the metal plate with the roller contacted with the metal plate in the horizontal direction under the above described condition, and applying a direct voltage of 100 V to between the shaft and the metal plate, while the drum resistance refers to an electric resistance value determined by applying a direct voltage of 100 V to between the metal plate and the conductive sleeve of the drum, with the drum placed on the metal plate under the above described condition, and with 1 Kg of load applied in a same manner as described above.

### DETAILED DESCRIPTION OF THE PREFERRED EMBODIMENTS

The present invention will be described more in detail in accordance with the following Examples, but the present invention should not be limited to these Examples.

### (Example 1)

For ingredient (A), allyl terminated polyisobutylene (trade name: Epion EP 400A, manufactured by Kaneka Corporation, molecular weight: 10000, total amount of repeating units originating from isobutylene: 98%) was used. To 100 g of this ingredient (A), 10 g of carbon black (trade name: #35 G, manufactured by Asahi Carbon Co., Ltd.) of ingredient (D), 1 g of epoxidized silane coupling agent (trade name: A-186, manufactured by Nihon Juniker Co., Ltd.) as ingredient (E), 50 g of saturated hydrocarbon based process oil (trade name: PAO 5006, manufactured by Idemitsu Chemical Co., Ltd.) as a plasticizer, and 1 g of anti-oxidant (trade name: MARK AO-50, manufactured by Asahi Denka Co., Ltd.) were added, and were kneaded three times by a roller. To this mixture, 0.2 g of tetra (n-butoxy) titanium was added as ingredient (F) and mixed sufficiently. To this mixture, 5.3 g of polyorganohydrogensiloxane (trade name: CR 100, manufactured by Kaneka Corporation) as ingredient (B), 57 µL of bis (1, 3-divinyl-1, 1, 3, 3-tetramethyl disiloxane) platinum complex catalyst (content of platinum: 3 wt%, xylene solution) as ingredient (C), and 0.25 g of 1-ethynyl-1-cyclohexanol as a storage stability modifier were added and mixed uniformly. This mixture was heated in an oven for 1 hour, and was thereafter degassed by a vacuum degassing and stirring apparatus (manufactured by C. TEC Co., Ltd.) for 60 minutes. This composition was loaded in a mold frame made of aluminum having a Teflon sheet spread therein, and was thereafter press-molded at 150°C for 30 minutes to obtain a sheeted cured material with thickness of 2 mm for evaluation . The volume resistivity of the obtained sheeted cured material was measured at 23°C and 60% relative humidity and with applied voltage of 1000 V.

### (Example 2)

As ingredient (A), Epion EP 400A (manufactured by Kaneka Corporation, allyl terminated polyisobutylene) was used as in the case of Example 1. To 100 g of the ingredient (A), 10 g of carbon black (trade name: #3030B, manufactured by Mitsubishi Chemical Co., Ltd.) as ingredient (D), 50 g of PAO 5006 (manufactured by Idemitsu Chemical Co., Ltd.) as a plasticizer, and 1 g of MARK AO-50 (manufactured by Asahi Denka Co., Ltd.) as an anti-oxidant were added, and were kneaded three times by a roller. Then, to this mixture, 1 g of epoxidized silane coupling agent (trade name: A-187, manufactured by Nihon Juniker Co., Ltd.) as ingredient (E) was added and mixed sufficiently, and further 0.2 g of tetra (n-butoxy) titanium was added as ingredient (F) and mixed sufficiently, and was heated in an oven at 50°C for 1 hour. Then, 5.3 g of CR 100 (manufactured by Kaneka Corporation, polyorganohydrogensiloxane) used in Example 1 as ingredient (B), 57 µL of bis (1, 3-divinyl-1, 1, 3, 3-tetramethyl disiloxane) platinum complex catalyst (content of platinum: 3 wt%, xylene solution) as ingredient (C), and 0.25 g of 1-ethynyl-1-cyclohexanol as a storage stability modifier were added and mixed uniformly. This mixture was heated in an oven at 50°C for 1 hour, and was thereafter degassed by a vacuum degassing and stirring apparatus (manufactured by C. TEC Co., Ltd.) for 60 minutes. From this composition, a sheeted cured material for evaluation was prepared in a same manner as Example 1, and its volume resistivity was measured.

### (Example 3)

A sheet for evaluation was prepared, and its volume resistivity was measured in a same manner as Example 2 except that 1 g of Epicoat 825 (trade name), an epoxy resin manufactured by Yuka Shell Co., Ltd. was added instead of the epoxidized silane coupling agent of ingredient (E) in the formulation of the curable composition of Example 2.

### (Example 4)

A sheet for evaluation was prepared in a same manner as Example 2 except that the ingredient (E) was changed to Epicoat 825 (manufactured by Yuka Shell Co., Ltd.), and the added amount thereof was increased to 2 g in the formulation of the curable composition of Example 2. The volume resistivity was measured for the obtained sheet for evaluation.

### (Example 5)

A sheet for evaluation was prepared, and its volume resistivity was measured in a same manner as Example 2 except that the ingredient (E) was changed to 1 g of Epicoat 171 (trade name) manufactured by Yuka Shell Co., Ltd. in the formulation of the curable composition of Example 2.

### (Comparative Example 1)

A sheet for evaluation was prepared, and its volume resistivity was measured in a same manner as Example 1 except that the ingredient (E) was not added in the formulation of the curable composition of Example 1.

### (Comparative Example 2)

A sheet for evaluation was prepared, and its volume resistivity was measured in a same manner as Example 1 except that neither ingredient (E) nor ingredient (F) was added in the formulation of the curable composition of Example 1.

### (Comparative Example 3)

A sheet for evaluation was prepared, and its volume resistivity was measured in a same manner as Example 2 except that neither ingredient (E) nor ingredient (F) was added in the formulation of the curable composition of Example 2.

### (Comparative Example 4)

A sheet for evaluation was prepared, and its volume resistivity was measured in a same manner as Example 1 except that the ingredient (F) was not added in the formulation of the curable composition of Example 1.

The formulations of the above curable compositions of Examples 1 to 5 and Comparative Examples 1 to 4, and the results of evaluation of their cured materials are shown in Table 1.

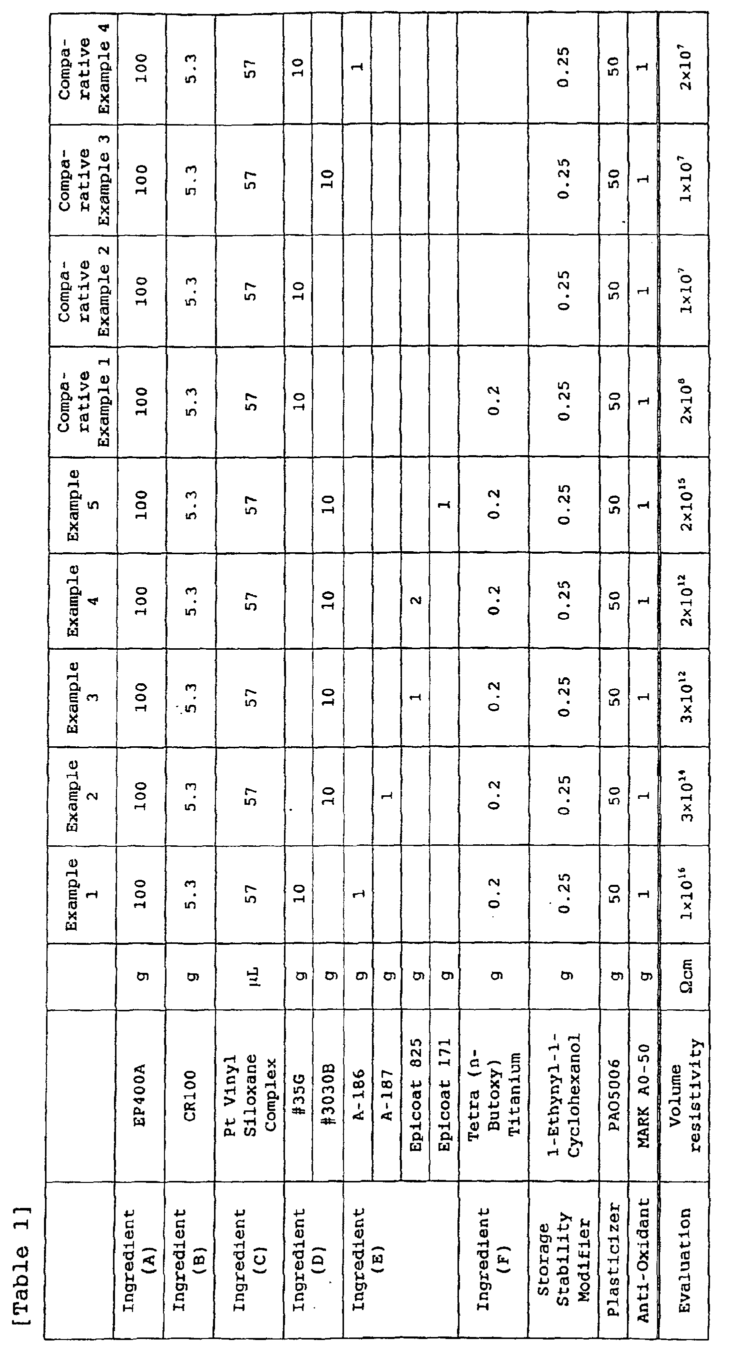

As apparent from Table 1, the curable compositions of the present invention (Examples 1 to 5) show larger values of volume resistivity of cured materials than the curable compositions of Comparative Examples 1 to 4 although the contents of carbon black are the same. This indicates that for the curable composition of the present invention, the surface of carbon black was treated with ingredients (E) and (F), whereby the carbon black was prevented from coagulating when the composition was cured, and the state of dispersion could be controlled even after curing, and therefore rapid reduction in volume resistivity was prevented.

### (Example 6)

As ingredient (A), Epion EP 400A (manufactured by Kaneka Corporation, allyl terminated polyisobutylene, molecular weight: 10000) was used as in the case of Example 1. To 100 g of this ingredient (A), 10 g of Regal 330 R (trade name) manufactured by Cabot Co., Ltd. as carbon black of ingredient (D), 50 g of PAO 5006 (manufactured by Idemitsu Chemical Co., Ltd.) as a plasticizer, and 1 g of MARK AO-50 (manufactured by Asahi Denka Co., Ltd.) as an anti-oxidant were added, and were kneaded three times by a roller. To this mixture, 2 g of epoxy resin (trade name: CY 177, manufactured by Chiba Specialty Chemicals Co., Ltd.) was added as ingredient (E) and mixed sufficiently, and 0.2 g of tetra (n-butoxy) titanium was further added as ingredient (F) and mixed sufficiently, and was heated in an oven at 50°C for 1 hour. Then, to this mixture, 5.3 g of CR 100 (manufactured by Kaneka Corporation, polyorganohydrogensiloxane) as ingredient (B), 57 µL of bis (1, 3-divinyl-1, 1, 3, 3-tetramethyl disiloxane) platinum complex catalyst (content of platinum: 3 wt%, xylene solution) as ingredient (C), and 0.25 g of 1-ethynyl-1-cyclohexanol as a storage stability modifier were added and mixed uniformly. This mixture was heated in an oven at 50°C for 1 hour, and was thereafter degassed by a vacuum degassing and stirring apparatus (manufactured by C. TEC Co., Ltd.) for 60 minutes. This composition was loaded in a mold frame made of aluminum having a Teflon sheet spread therein, and was thereafter press-molded at 150°C for 30 minutes to obtain a sheeted cured material with thickness of 2 mm for evaluation . The volume resistivity of the obtained sheeted cured material was measured at 23°C and 60% relative humidity and with applied voltage of 1000 V.

### (Example 7)

A sheet for evaluation was prepared, and its volume resistivity was measured in a same manner as example 6 except that 0.3 g of organotitanium compound TOG (trade name) manufactured by Nippon Soda Co., Ltd. was used as ingredient (F) in the formulation of the curable composition described in Example 6.

### (Example 8)

A sheet for evaluation was prepared, and its volume resistivity was measured in a same manner as example 6 except that 0.3 g of organotitanium compound T-50 (trade name) manufactured by Nippon Soda Co., Ltd. was used as ingredient (F) in the formulation of the curable composition described in Example 6.

### (Example 9)

A sheet for evaluation was prepared, and its volume resistivity was measured in a same manner as example 6 except that 0.2 g of organotitanium compound KR-TTS (trade name) manufactured by Ajinomoto Fine Techno Co., Ltd. was used as ingredient (F) in the formulation of the curable composition described in Example 6.

### (Example 10)

A sheet for evaluation was prepared, and its volume resistivity was measured in a same manner as example 6 except that 0.2 g of organoaluminum compound AL-M (trade name) manufactured by Ajinomoto Fine Techno Co., Ltd. was used as ingredient (F) in the formulation of the curable composition described in Example 6.

The formulations of the above curable compositions of Examples 6 to 10, and the results of evaluation of their cured materials are shown in Table 2.

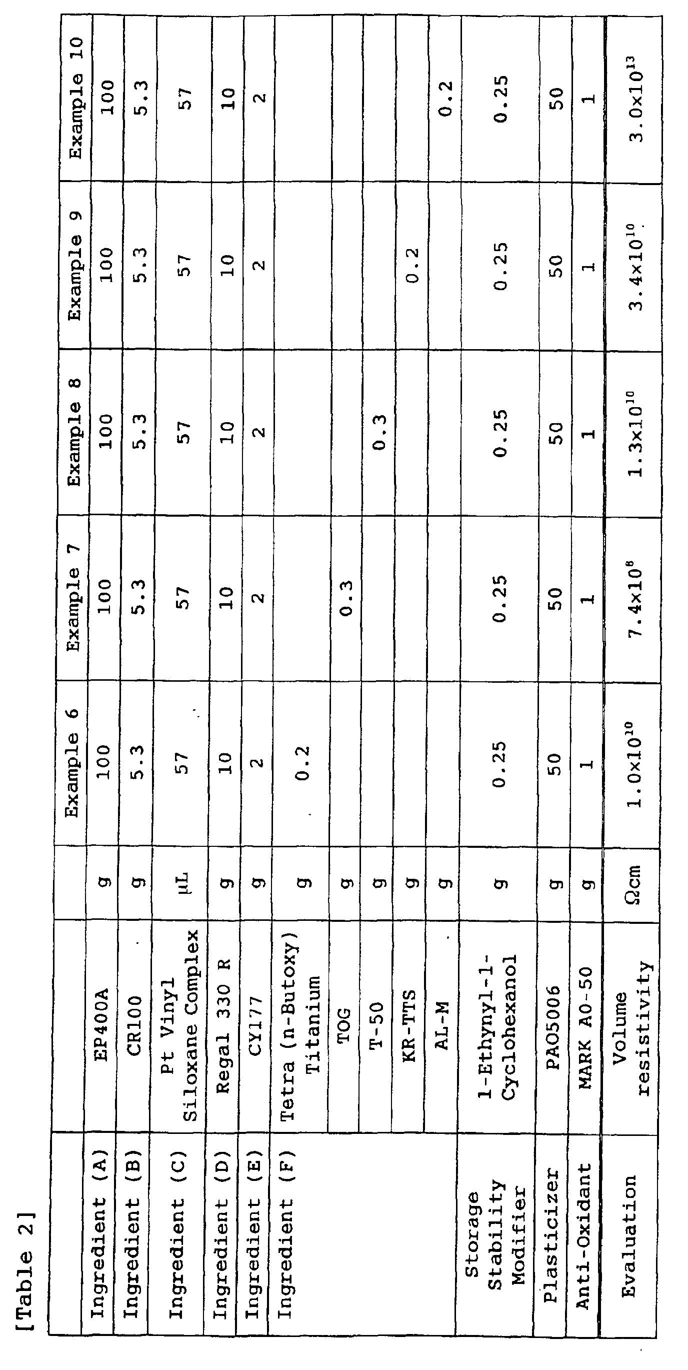

### (Example 11)

As ingredient (A), Epion EP 400A (manufactured by Kaneka Corporation, allyl terminated polyisobutylene, molecular weight: 10000) was used as in the case of Example 1. To 100 g of this ingredient (A), 10 g of carbon black #3030 B (manufactured by Mitsubishi Chemical Co., Ltd.) as ingredient (D), 50 g of PAO 5006 (manufactured by Idemitsu Chemical Co., Ltd.) as a plasticizer, and 1 g of MARK AO-50 (manufactured by Asahi Denka Co., Ltd.) as an anti-oxidant were added, and were kneaded three times by a roller. Then, to this mixture, 1 g of copolymer of maleic anhydride and styrene and allyl terminated polyoxyalkylene (trade name: Mariarim AWS0851, manufactured by NOF Corporation) as ingredient (E) was added and mixed sufficiently, and 0.2 g of tetra (n-butoxy) titanium was further added as ingredient (F) and mixed sufficiently, and was heated in an oven at 50°C for 1 hour. Then, 5.3 g of CR 100 (manufactured by Kaneka Corporation, polyorganohydrogensiloxane) as ingredient (B), 57 µL of bis (1, 3-divinyl-1, 1, 3, 3-tetramethyl disiloxane) platinum complex catalyst (content of platinum: 3 wt%, xylene solution) as ingredient (C), and 0.25 g of 1-ethynyl-1-cyclohexanol as a storage stability modifier were added and mixed uniformly. This mixture was heated in an oven for 1 hour, and was thereafter degassed by a vacuum degassing and stirring apparatus (manufactured by C. TEC Co., Ltd.) for 60 minutes. This composition was loaded in a mold frame made of aluminum having a Teflon sheet spread therein, and was thereafter press-molded at 150°C for 30 minutes to obtain a sheeted cured material with thickness of 2 mm for evaluation . The volume resistivity of the obtained sheeted cured material was measured at 23°C and 60% relative humidity and with applied voltage of 1000 V.

### (Example 12)

A sheet for evaluation was prepared, and its volume resistivity was measured in a same manner as Example 11 except that the copolymer of maleic anhydride and styrene and allyl terminated polyoxyalkylene as ingredient (E) was changed to Mariarim AAB 0851 (trade name) manufactured by NOF Corporation in the formulation of the curable composition of Example 11.

### (Comparative Example 5)

A sheet for evaluation was prepared, and its volume resistivity was measured in a same manner as Example 11 except that the ingredient (E) was not added in the formulation of the curable composition of Example 11.

### (Comparative Example 6)

A sheet for evaluation was prepared, and its volume resistivity was measured in a same manner as Example 11 except that neither ingredient (E) nor ingredient (F) was added in the formulation of the curable composition of Example 11.

### (Comparative Example 7)

A sheet for evaluation was prepared, and its volume resistivity was measured in a same manner as Example 11 except that the ingredient (F) was not added in the formulation of the curable composition of Example 11.

The formulations of the above curable compositions of Examples 11 and 12 and Comparative Examples 5 to 7, and the results of evaluation of their cured materials are shown in Table 3.

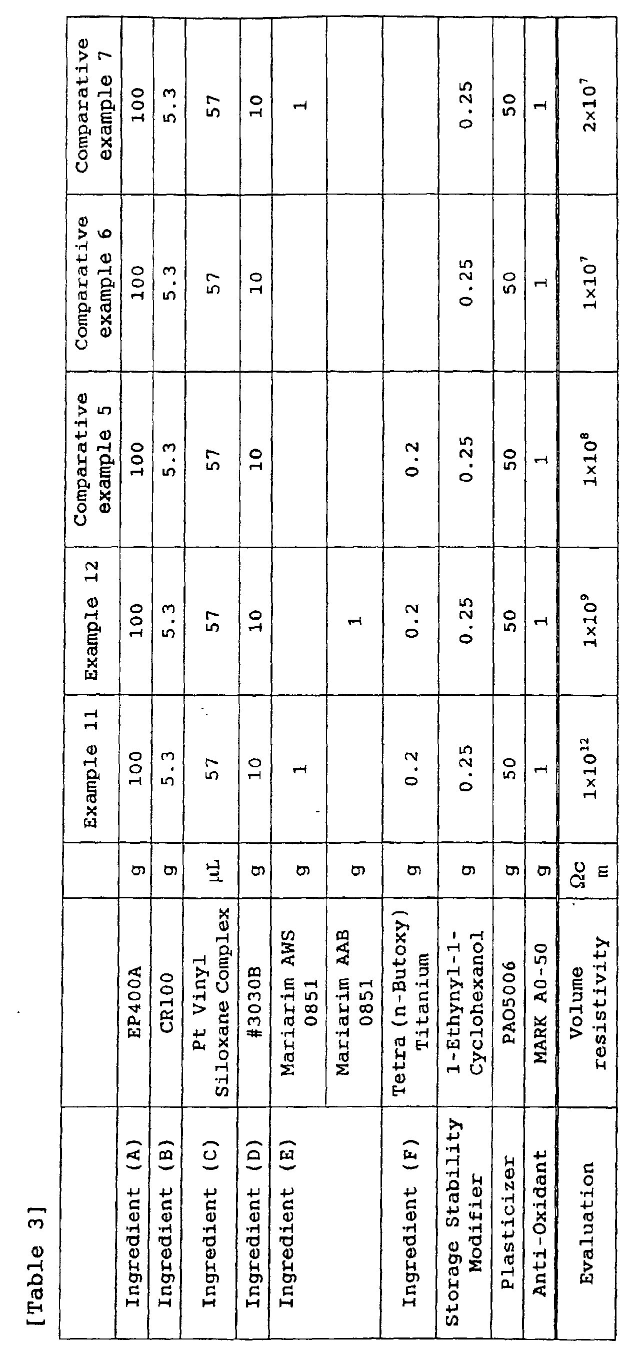

As apparent from Table 3, the curable compositions of the present invention (Examples 11 and 12) show larger values of volume resistivity of cured materials than the curable compositions of Comparative Examples 5 to 7 although the contents of carbon black are the same. This indicates that for the curable composition of the present invention, the surface of carbon black was treated with ingredients (E) and (F), whereby the carbon black was prevented from coagulating when the composition was cured, and the state of dispersion could be controlled even after curing, and therefore rapid reduction in volume resistivity was prevented.

### (Example 13)

As ingredient (A), allyl terminated polyoxypropylene (trade name: ACX 004-N, manufactured by Kaneka Corporation, molecular weight: 9000) was used. To 100 g of this ingredient (A), 10 g of carbon black (trade name: MA 220 manufactured by Mitsubishi Chemical Co., Ltd.) as ingredient (D), and 10 g of Epicoat 171 (manufactured by Yuka Shell Co., Ltd.) as ingredient (E) were added, and were kneaded three times by a roll. To this mixture, 0.2 g of tetra (n-butoxy) titanium was added as ingredient (F), and was mixed sufficiently. Then, 6.6 g of polyorganohydrogensiloxane (trade name: ACX 004-C, manufactured by Kaneka Corporation) as ingredient (B), 35 µL of bis (1, 3-divinyl-1, 1, 3, 3-tetramethyl disiloxane) platinum complex catalyst (content of platinum: 3 wt%, xylene solution) as ingredient (C), and 0.08 g of dimethyl maleate as a storage stability modifier were added and mixed uniformly. This mixture was degassed by a vacuum degassing and stirring apparatus (manufactured by C. TEC Co., Ltd.) for 30 minutes. This composition was loaded in a mold frame made of aluminum having a Teflon sheet spread therein, and was thereafter press-molded at 140°C for 15 minutes to obtain a sheeted cured material with thickness of 2 mm for evaluation. The volume resistivity of the obtained sheeted cured material was measured at 23°C and 60% relative humidity and with applied voltage of 1000 V.

### (Example 14)

A sheet for evaluation was prepared, and its volume resistivity was measured in a same manner as Example 13 except that 1 g of Mariarim AWS 0851 (manufactured by NOF Corporation, copolymer of maleic anhydride and styrene and allyl terminated polyoxyalkylene) was used as ingredient (E) in the formulation of the curable composition of Example 13.

### (Example 15)

A sheet for evaluation was prepared, and its volume resistivity was measured in a same manner as Example 13 except that 1 g of Epicoat 171 (manufactured by Yuka Shell Co., Ltd.) and 1 g of Mariarim AWS 0851 (manufactured by NOF Corporation) was used as ingredient (E) in the formulation of the curable composition of Example 13.

### (Comparative Example 8)

A sheet for evaluation was prepared, and its volume resistivity was measured in a same manner as Example 13 except that the ingredient (E) was not added in the formulation of the curable composition of Example 13.

### (Comparative Example 9)

A sheet for evaluation was prepared, and its volume resistivity was measured in a same manner as Example 13 except that neither ingredient (E) nor ingredient (F) was added in the formulation of the curable composition of Example 13.

The formulations of the above curable compositions of Examples 13 to 15 and Comparative Examples 8 and 9, and the results of evaluation of their cured materials are shown in Table 4.

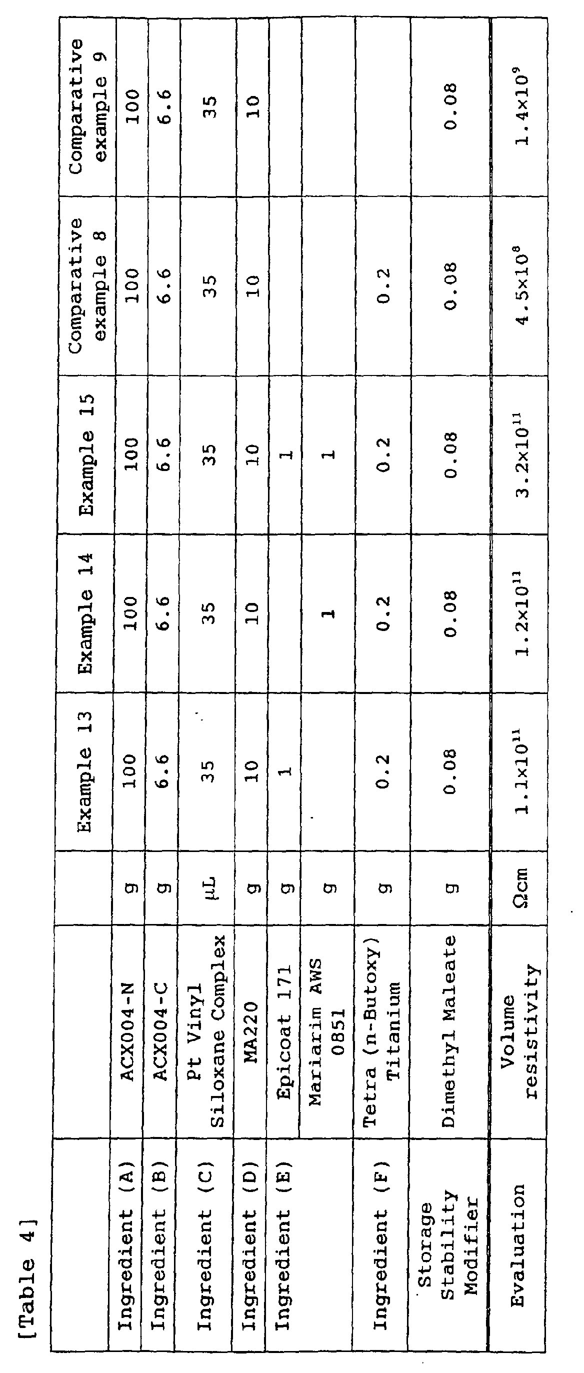

As apparent from Table 4, the curable compositions of the present invention (Examples 13 to 15) show larger values of volume resistivity of cured materials than the curable compositions of Comparative Examples 8 and 9 although the contents of carbon black are the same. This indicates that for the curable composition of the present invention, the surface of carbon black was treated with ingredients (E) and (F), whereby the carbon black was prevented from coagulating when the composition was cured, and the state of dispersion could be controlled even after curing, and therefore rapid reduction in volume resistivity was prevented.

### (Example 16)

As ingredient (A), ACX 004-N (manufactured by Kaneka Corporation, allyl terminated polyoxypropylene, molecular weight: 9000) was used as in the case of Example 13. To 100 g of this ingredient (A), 10 g of MA 220 (manufactured by Mitsubishi Chemical Co., Ltd.) was added as ingredient (D), and was kneaded three times by a roll. Then, to this mixture, 2 g of epoxy resin (trade name: Epiol BE 200, manufactured by NOF Corporation) was added as ingredient (E) and mixed sufficiently, and thereafter 0.2 g of tetra (n-butoxy) titanium was further added thereto as ingredient (F) and mixed sufficiently, and was heated in an oven at 50°C for 1 hour. Then, 6.6 g of ACX 004-C (manufactured by Kaneka Corporation, polyorganohydrogensiloxane) as ingredient (B), 35 µL of bis (1, 3-divinyl-1, 1, 3, 3-tetramethyl disiloxane) platinum complex catalyst (content of platinum: 3 wt%, xylene solution) as ingredient (C), and 0.1 g of 1-ethynyl-1-cyclohexanol as a storage stability modifier were added and mixed uniformly. This mixture was heated in an oven at 50°C for 1 hour, and was thereafter degassed by a vacuum degassing and stirring apparatus (manufactured by C. TEC Co., Ltd.) for 60 minutes. This composition was loaded in a mold frame made of aluminum having a Teflon sheet spread therein, and was thereafter press-molded at 140°C for 20 minutes to obtain a sheeted cured material with thickness of 2 mm for evaluation. The volume resistivity of the obtained sheeted cured material was measured at 23°C and 60% relative humidity and with applied voltage of 1000 V.

### (Example 17)

A sheet for evaluation was prepared, and its volume resistivity was measured in a same manner as Example 16 except that 8 g of MA 220 (manufactured by Mitsubishi Chemical Co., Ltd.) was used as ingredient (D) in the formulation of the curable composition of Example 16.

### (Example 18)

A sheet for evaluation was prepared, and its volume resistivity was measured in a same manner as Example 16 except that 12 g of MA 220 (manufactured by Mitsubishi Chemical Co., Ltd.) was used as ingredient (D), and 2 g of CY 177 (manufactured by Chiba Specialty Chemicals, Co., Ltd., epoxy resin) was used as ingredient (E) in the formulation of the curable composition of Example 16.

### (Example 19)

A sheet for evaluation was prepared, and its volume resistivity was measured in a same manner as Example 16 except that 5 g of #3030 B (manufactured by Mitsubishi Chemical Co., Ltd.) was used as ingredient (D) in the formulation of the curable composition of Example 16.

### (Example 20)

A sheet for evaluation was prepared, and its volume resistivity was measured in a same manner as Example 16 except that 7.5 g of #3030 B (manufactured by Mitsubishi Chemical Co., Ltd.) was used as ingredient (D), and 2 g of CY 177 (manufactured by Chiba Specialty Chemicals, Co., Ltd.) was used as ingredient (E) in the formulation of the curable composition of Example 16.

The formulations of the above curable compositions of Examples 16 to 20, and the results of evaluation of their cured materials are shown in Table 5.

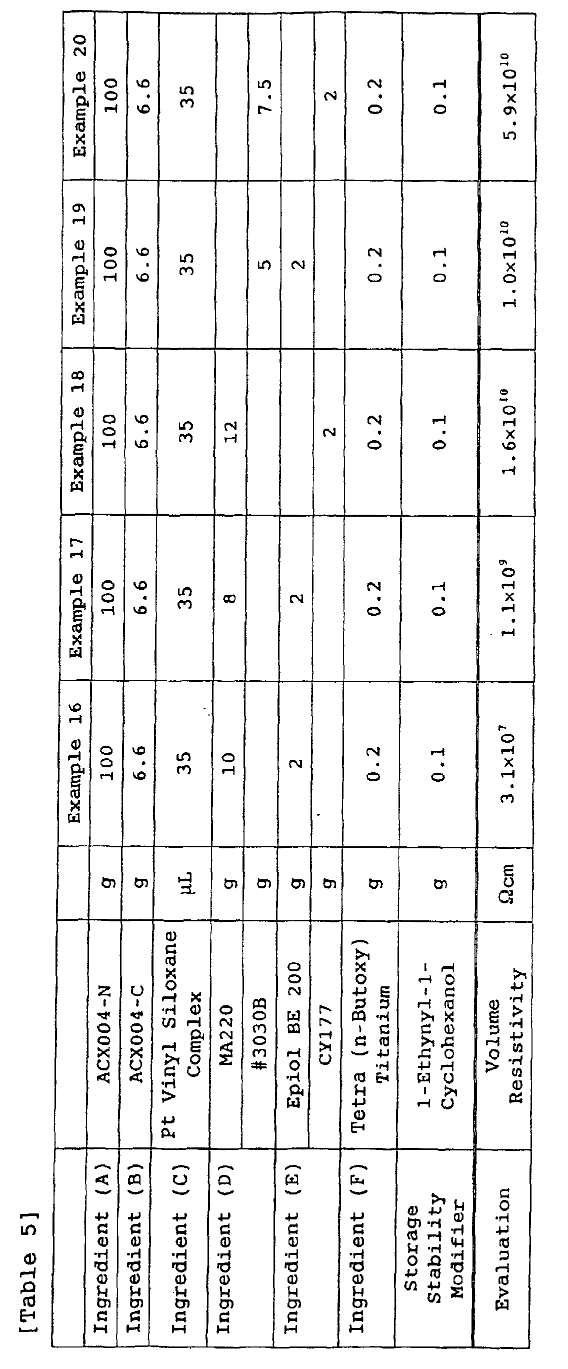

### (Example 21)

As ingredient (A), Epion EP 400A (manufactured by Kaneka Corporation, allyl terminated polyisobutylene, molecular weight: 10000) was used as in the case of Example 1. To 100 g of this ingredient (A), 10 g of Regal 330 R (manufactured by Cabot Co., Ltd., specific surface area: 94 m²/g) as ingredient (D), 50 g of PAO 5006 (manufactured by Idemitsu Chemical Co., Ltd.) as a plasticizer, and 1 g of MARK AO-50 (manufactured by Asahi Denka Co., Ltd.) as an anti-oxidant were added, and were kneaded three times by a roller. Then, to this mixture, 2 g of CY 177 (manufactured by Chiba Specialty Chemicals Co., Ltd., epoxy resin) was added as ingredient (E) and mixed sufficiently, and 0.2 g of tetra (n-butoxy) titanium was further added as ingredient (F) and mixed sufficiently, and was heated in an oven at 50°C for 1 hour. Then, to this mixture, 5.3 g of CR 100 (manufactured by Kaneka Corporation, polyorganohydrogensiloxane) as ingredient (B), 57 µL of bis (1, 3-divinyl-1, 1, 3, 3-tetramethyl disiloxane) platinum complex catalyst (content of platinum: 3 wt%, xylene solution) as ingredient (C), and 0.25 g of 1-ethynyl-1-cyclohexanol as a storage stability modifier were added and mixed uniformly. This mixture was heated in an oven at 50°C for 1 hour, and was thereafter degassed by a vacuum degassing and stirring apparatus (manufactured by C. TEC Co., Ltd.) for 60 minutes. This composition was loaded in a mold frame made of aluminum having a Teflon sheet spread therein, and was thereafter press-molded at 150°C for 30 minutes to obtain a sheeted cured material with thickness of 2 mm for evaluation. The volume resistivity of the obtained sheeted cured material was measured at 23°C and 60% relative humidity and with applied voltage of 1000 V.

### (Example 22)

A sheet for evaluation was prepared, and its volume resistivity was measured in a same manner as Example 21 except that 10 g of #3050 B (manufactured by Mitsubishi Chemical Co., Ltd., specific surface area: 50 m²/g) was used as ingredient (D) in the formulation of the curable composition of Example 21.

### (Example 23)

A sheet for evaluation was prepared, and its volume resistivity was measured in a same manner as Example 21 except that 10 g of #20 (manufactured by Mitsubishi Chemical Co., Ltd., specific surface area: 45 m²/g) was used as ingredient (D) in the formulation-of the curable composition of Example 21.

### (Example 24)

A sheet for evaluation was prepared, and its volume resistivity was measured in a same manner as Example 21 except that 10 g of #35 G (manufactured by Asahi Carbon Co., Ltd., specific surface area: 24 m²/g) was used as ingredient (D) in the formulation of the curable composition of Example 21.

The formulations of the above curable compositions of Examples 21 to 24, and the results of evaluation of their cured materials are shown in Table 6.

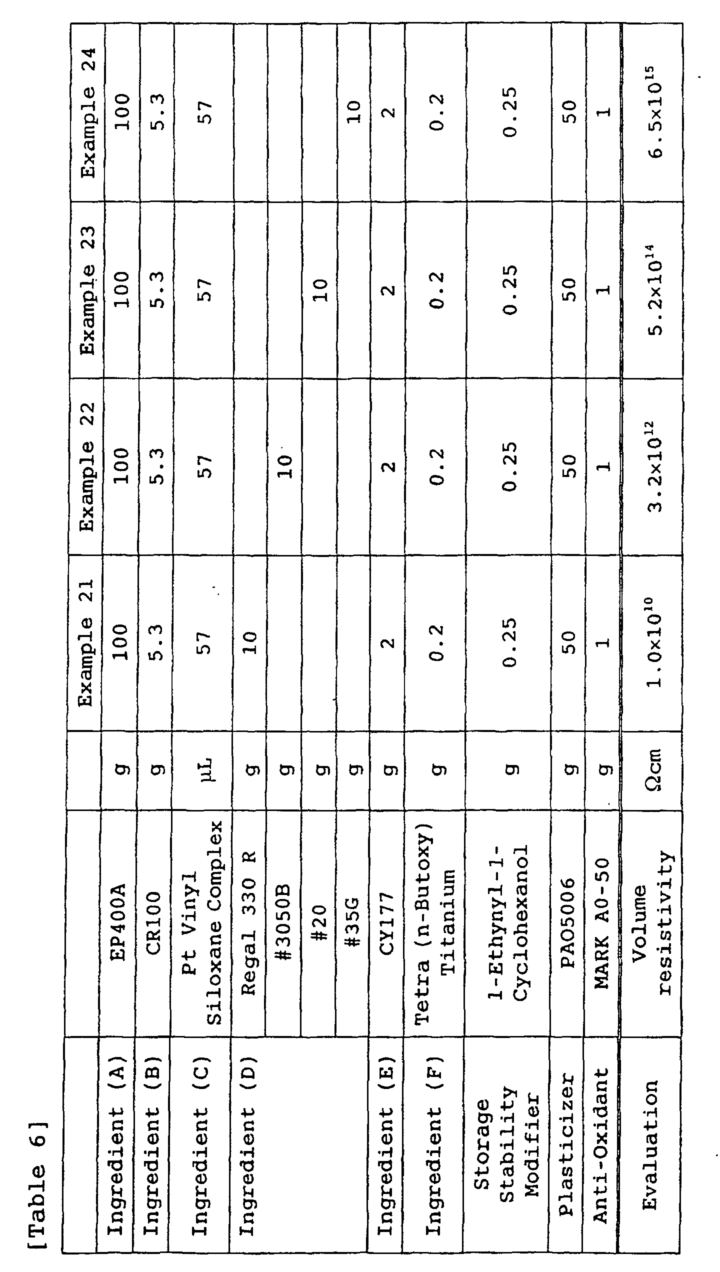

### (Example 25)

As ingredient (A), Epion EP 400A (manufactured by Kaneka Corporation, allyl terminated polyisobutylene, molecular weight: 10000) was used as in the case of Example 1. To 100 g of this ingredient (A), 10 g of #3030 B (specific surface area: 32 m²/g, manufactured by Mitsubishi Chemical Co., Ltd.) and 5 g of #3350 B (specific surface area: 125 m²/g, manufactured by Mitsubishi Chemical Co., Ltd.) as carbon black of ingredient (D), and 50 g of PAO 5006 (manufactured by Idemitsu Chemical Co., Ltd.) as a plasticizer were added, and were kneaded by a roll. Then, to this mixture, 2 g of CY 177 (manufactured by Chiba Specialty Chemicals Co., Ltd., epoxy resin) was added as ingredient (E) and mixed sufficiently, and thereafter 0.5 g of tetra (n-butoxy) titanium was further added as ingredient (F) and mixed sufficiently, and was heated in an oven at 50°C for 1 hour. Then, 5.3 g of CR 100 (manufactured by Kaneka Corporation, polyorganohydrogensiloxane) as ingredient (B), 57 µL of bis (1, 3-divinyl-1, 1, 3, 3-tetramethyl disiloxane) platinum complex catalyst (content of platinum: 3 wt%, xylene solution) as ingredient (C), and 0.25 g of 1-ethynyl-1-cyclohexanol as a storage stability modifier were added and mixed uniformly. This mixture was heated in an oven at 50°C for 1 hour, and was thereafter degassed by a vacuum degassing and stirring apparatus (manufactured by C. TEC Co., Ltd.) for 60 minutes. This composition was loaded in a mold frame made of aluminum having a Teflon sheet spread therein, and was thereafter press-molded at 150°C for 30 minutes to obtain a sheeted cured material with thickness of 2 mm for evaluation. The volume resistivity of the obtained sheeted cured material was measured at 23°C and 60% relative humidity and with applied voltage of 1000 V.

### (Example 26)

A sheet for evaluation was prepared, and its volume resistivity was measured in a same manner as Example 25 except that 10 g of #3030 B and 2 g of #3350 B were used as ingredient (D) in the formulation of the curable composition of Example 25.

### (Example 27)

A sheet for evaluation was prepared, and its volume resistivity was measured in a same manner as Example 25 except that 5 g of #3030 B and 2 g of #3350 B were used as ingredient (D) in the formulation of the curable composition of Example 25.

### (Example 28)

A sheet for evaluation was prepared, and its volume resistivity was measured in a same manner as Example 25 except that 5 g of #3030 B and 5 g of #3350 B were used as ingredient (D) in the formulation of the curable composition of Example 25.

### (Example 29)

A sheet for evaluation was prepared, and its volume resistivity was measured in a same manner as Example 25 except that 4 g of #3030 B and 6 g of #3350 B were used as ingredient (D) in the formulation of the curable composition of Example 25.

### (Example 30)

A sheet for evaluation was prepared, and its volume resistivity was measured in a same manner as Example 25 except that 3 g of #3030 B and 7 g of #3350 B were used as ingredient (D) in the formulation of the curable composition of Example 25.

The formulations of the above curable compositions of Examples 25 to 30, and the results of evaluation of their cured materials are shown in Table 7.

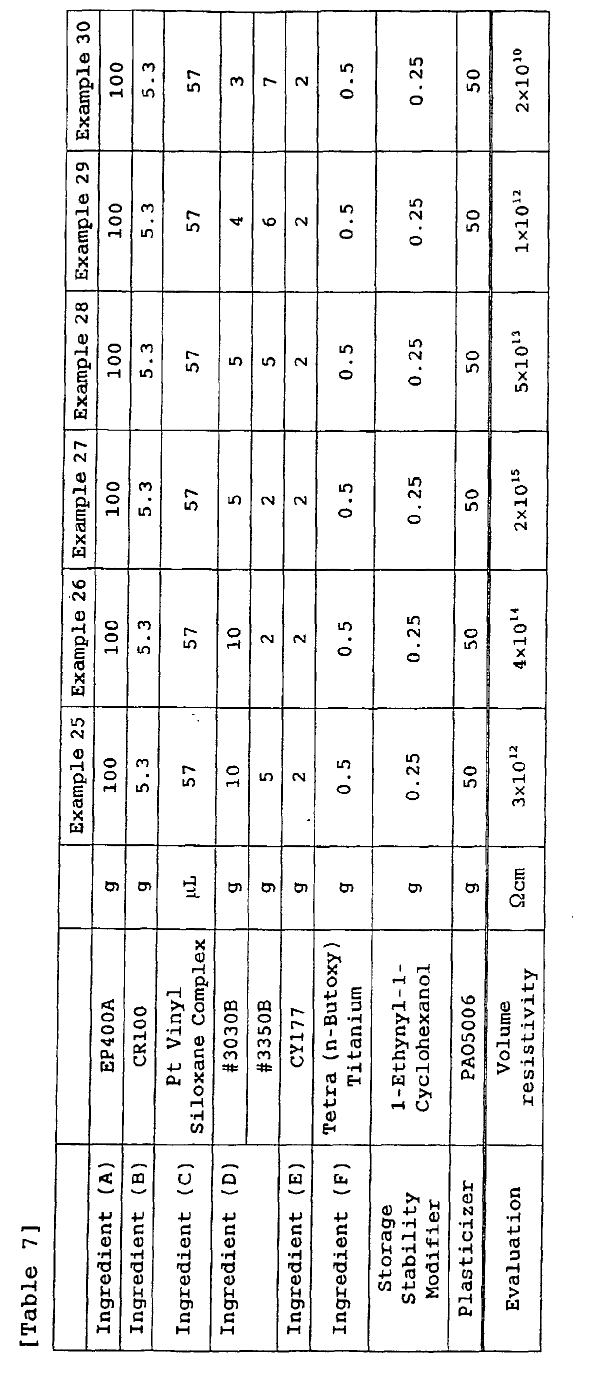

As apparent from Table 7, by using in combination at least two types of carbon black having different specific surface areas, the conductivity of the cured material can accurately be regulated.

### (Example 31)

As ingredient (A), Epion EP 400A (manufactured by Kaneka Corporation, allyl terminated polyisobutylene, molecular weight: 10000) was used as in the case of Example 1. To 100 g of this ingredient (A), 10 g of #3030 B (manufactured by Mitsubishi Chemical Co., Ltd.) as ingredient (D), and 50 g of PAO 5006 (manufactured by Idemitsu Chemical Co., Ltd.) as a plasticizer were added, and were kneaded three times by a roll. To this mixture, 2 g of oxypropylene based compound having a glycidyl group (trade name: Epiol P 200, manufactured by NOF Corporation) was added as ingredient (E) and mixed sufficiently, and thereafter 0.2 g of tetra (n-butoxy) titanium was further added as ingredient (F) and mixed sufficiently, and was heated in an oven at 50°C for 1 hour. Then, 5.3 g of CR 100 (manufactured by Kaneka Corporation, polyorganohydrogensiloxane) as ingredient (B), 57 µL of bis (1, 3-divinyl-1, 1, 3, 3-tetramethyl disiloxane) platinum complex catalyst (content of platinum: 3 wt%, xylene solution) as ingredient (C), and 0.25 g of 1-ethynyl-1-cyclohexanol as a storage stability modifier were added and mixed uniformly. This mixture was heated in an oven at 50°C for 1 hour, and was thereafter degassed by a vacuum degassing and stirring apparatus (manufactured by C. TEC Co., Ltd.) for 60 minutes. This composition was loaded in a mold frame made of aluminum having a Teflon sheet spread therein, and was thereafter press-molded at 150°C for 30 minutes to obtain a sheeted cured material with thickness of 2 mm for evaluation . The volume resistivity of the obtained sheeted cured material was measured at 23°C and 60% relative humidity and with applied voltage of 1000 V.

### (Example 32)

A sheet for evaluation was prepared, and its volume resistivity was measured in a same manner as Example 31 except that the amount of Epiol P 200 of ingredient (E) was changed to 1 g in the formulation of the curable composition described in Example 31.

### (Example 33)

A sheet for evaluation was prepared, and its volume resistivity was measured in a same manner as Example 31 except that 1 g of oxyethylene based compound having a glycidyl group (trade name: Epiol BE 200, manufactured by NOF Corporation) was used as ingredient (E) in the formulation of the curable composition described in Example 31.

### (Example 34)

A sheet for evaluation was prepared, and its volume resistivity was measured in a same manner as Example 31 except that 2 g of oxypropylene based compound having a stearyl ester site (trade name: Unisafe NKL 9520, manufactured by NOF Corporation) was used as ingredient (E) in the formulation of the curable composition described in Example 31.

### (Example 35)

A sheet for evaluation was prepared, and its volume resistivity was measured in a same manner as Example 31 except that 2.5 g of Unisafe NKL 9520 (manufactured by NOF Corporation) and 1 g of Epiol BE 200 (manufactured by NOF Corporation) were used as ingredient (E) in the formulation of the curable composition of Example 31.

### (Example 36)

A sheet for evaluation was prepared, and its volume resistivity was measured in a same manner as Example 31 except that 2.5 g of Unisafe NKL 9520 (manufactured by NOF Corporation), 1 g of Epiol BE 200 (manufactured by NOF Corporation), and 2 g of Mariarim AWS 0851 (manufactured by NOF Corporation, oxybutylene based compound having an acid anhydride) were used as ingredient (E) in the formulation of the curable composition of Example 31.

The formulations of the above curable compositions of Examples 31 to 36, and the results of evaluation of their cured materials are shown in Table 8.

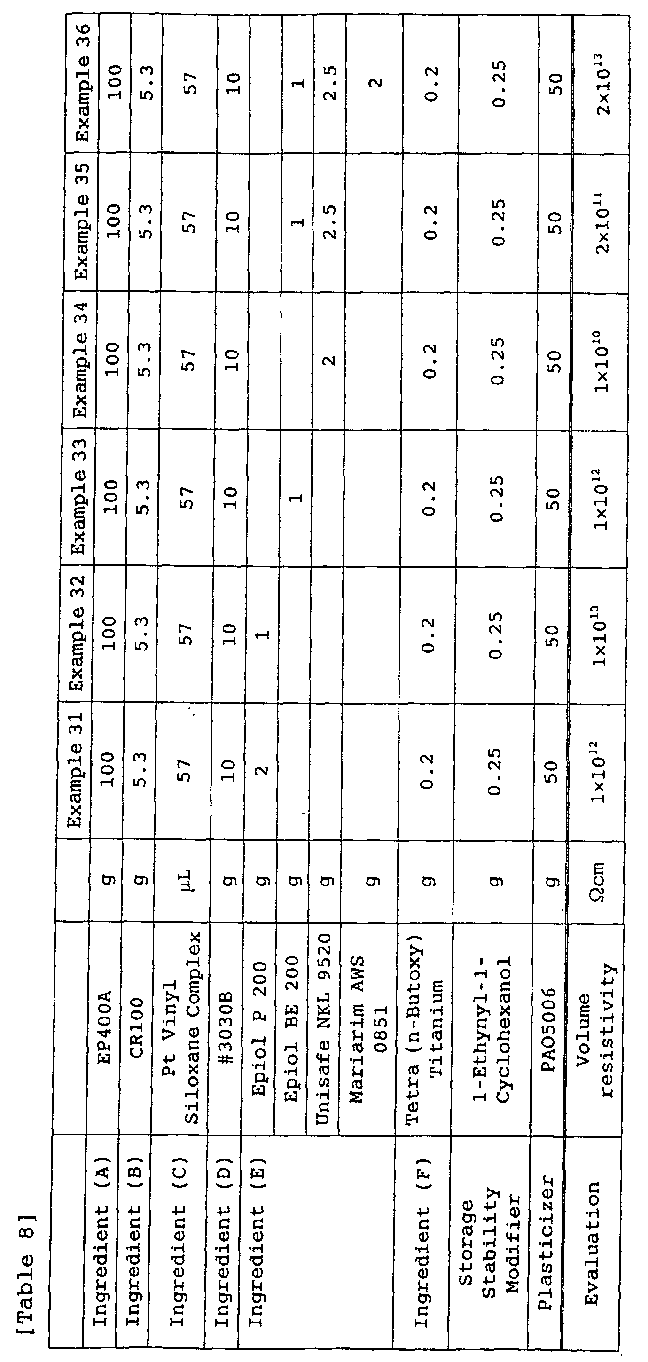

As apparent from Table 8, by using a compound having an oxyalkylene in the molecule as ingredient (E) in the curable composition, the range in which the conductivity is regulated can be widened.

### (Example 37)

As ingredient (A), Epion EP 400A (manufactured by Kaneka Corporation, allyl terminated polyisobutylene, molecular weight: 10000) was used as in the case of Example 1. To 100 g of this ingredient (A), 10 g of #3030 B (manufactured by Mitsubishi Chemical Co., Ltd.) as ingredient (D), 50 g of PAO 5006 (manufactured by Idemitsu Chemical Co., Ltd.) as a plasticizer, and 1 g of MARK AO-50 (manufactured by Asahi Denka Co., Ltd.) were added, and were kneaded three times by a roll. To this mixture, 1 g of epoxy resin having per molecule 0.8 epoxy groups on average (trade name: YED 111, manufactured by Yuka Shell Co., Ltd.) was added as ingredient (E) and mixed sufficiently, and thereafter 0.2 g of tetra (n-butoxy) titanium was further added as ingredient (F) and mixed sufficiently, and was heated in an oven at 50°C for 1 hour. Then, 5.3 g of CR 100 (manufactured by Kaneka Corporation, polyorganohydrogensiloxane) as ingredient (B), 57 µL of bis (1, 3-divinyl-1, 1, 3, 3-tetramethyl disiloxane) platinum complex catalyst (content of platinum: 3 wt%, xylene solution) as ingredient (C), and 0.25 g of 1-ethynyl-1-cyclohexanol as a storage stability modifier were added and mixed uniformly. This mixture was heated in an oven at 50°C for 1 hour, and was thereafter degassed by a vacuum degassing and stirring apparatus (manufactured by C. TEC Co., Ltd.) for 60 minutes. This composition was deposited in thickness of 2 mm on an aluminum plate, and was cured at 150°C for 10 minutes . Samples for evaluation obtained in this way were tested in such a manner as to strip the composition from the aluminum plate by hand, and the adhesiveness with the aluminum plate was evaluated in such a way that those separating at the interface were rated as "good", those separating partly at the interface and partly in coagulation were rated as "mediocre", and those separating in coagulation were rated as "wrong".

### (Example 38)

Samples for evaluation were prepared to evaluate the adhesiveness with the aluminum plate in a same manner as Example 37 except that 1 g of epoxy resin having per molecule 1.5 epoxy groups on average (trade name: YED 216, manufactured by Yuka Shell Co., Ltd.) in the formulation of the curable composition of Example 37.

The formulations of the above curable compositions of Examples 37 and 38, and the results of evaluation of their cured materials are shown in Table 9.

**[Table 9]**

| | | | Example 37 | Example 38 |
|---|---|---|---|---|
| Ingredient (A) | EP400A | g | 100 | 100 |
| Ingredient (B) | CR100 | g | 5.3 | 5.3 |
| Ingredient (C) | Pt Vinyl Siloxane Complex | µL | 57 | 57 |
| Ingredient (D) | #3030B | g | 10 | 10 |
| Ingredient (E) | YED111 | g | 1 | |
| | YED216 | g | | 1 |
| Ingredient (F) | Tetra (n-Butoxy) Titanium | g | 0.2 | 0.2 |
| Storage Stability Modifier | 1-Ethynyl-1-Cyclohexanol | 9 | 0.25 | 0.25 |
| Plasticizer | PAO5006 | g | 50 | 50 |
| Anti-Oxidant | MARK A0-50 | g | 1 | 1 |
| Evaluation | | | Good | Mediocre |

As apparent from Table 9, by using as the compound of ingredient (E) an epoxidized compound having per molecule 0.6 to 1.2 epoxy groups on average, adhesion of the composition to the mold during molding can be alleviated.

### (Example 39)

As ingredient (A), Epion EP 400A (manufactured by Kaneka Corporation, allyl terminated polyisobutylene, molecular weight: 10000) was used as in the case of Example 1. To 100 g of this ingredient (A), 10 g of Regal 330 R (manufactured by Cabot Co., Ltd.) as ingredient (D), 10 g of silica (pH = 7) provided with hydrophobicity (trade name: Nip Seal SS-50A, manufactured by Nihon Silica Kogyo Co., Ltd.) as ingredient (G), 50 g of PAO 5006 (manufactured by Idemitsu Chemical Co., Ltd.) as a plasticizer, and 1 g of MARK AO-50 (manufactured by Asahi Denka Co., Ltd.) as an anti-oxidant were added, and were kneaded three times by a roller. To this mixture, 2 g of CY 177 (manufactured by Chiba Specialty Chemicals Co., Ltd., epoxy resin) was added as ingredient (E) and mixed sufficiently, and 0.2 g of tetra (n-butoxy) titanium was further added as ingredient (F) and mixed sufficiently, and was heated in an oven at 50°C for 1 hour. Then, to this mixture, 1 g of CR 100 (manufactured by Kaneka Corporation, polyorganohydrogensiloxane) as ingredient (B), and 7 g of Compound B having a structure expressed by the following Formula (9) were added.

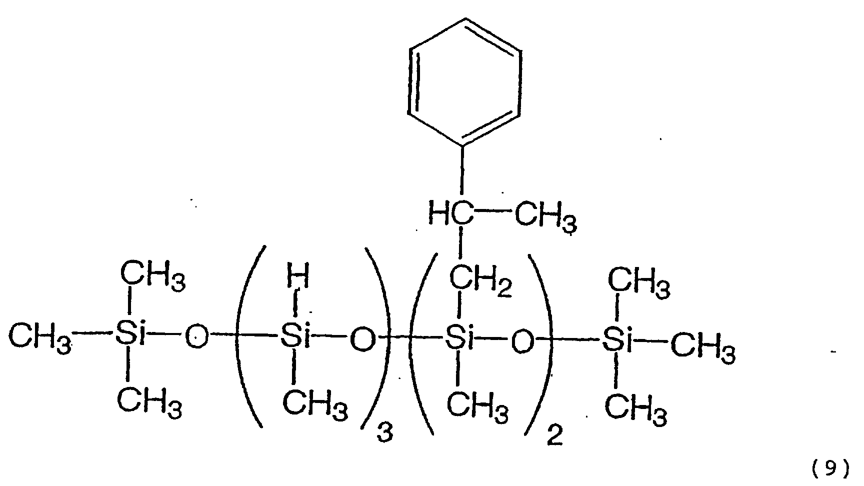

Further, 57 µL of bis (1, 3-divinyl-1, 1, 3, 3-tetramethyl disiloxane) platinum complex catalyst (content of platinum: 3 wt%, xylene solution) as ingredient (C), and 0.25 g of 1-ethynyl-1-cyclohexanol as a storage stability modifier were added and mixed uniformly. This mixture was heated in an oven at 50°C for 1 hour, and was thereafter degassed by a vacuum degassing and stirring apparatus (manufactured by C. TEC Co., Ltd.) for 60 minutes. This composition was loaded in a mold frame made of aluminum having a Teflon sheet spread therein, and was thereafter press-molded at 150°C for 30 minutes to obtain a sheeted cured material with thickness of 2 mm for evaluation. The obtained sheeted cured material was struck with a molding frame for No. 2 (1/3) mold specified in JIS K7113, and Shimadzu Auto Graph AG-2000A (manufactured by Shimadzu Corp.) was used to measure and evaluate break strength and maximum elongation at a constant temperature and relative humidity of 23°C and 65 ± 5%, at a tension speed of 200 / min, and with a chuck-to-chuck distance of 20 mm. Also, the volume resistivity of the obtained sheeted cured material was measured at 23°C and 60% relative humidity and with applied voltage of 1000 V.

### (Example 40)

A sheet for evaluation was prepared, and the evaluation thereof was conducted in a same manner as Example 39 except that 7.5 g of Nip Seal SS-50A of ingredient (G) was added in the formulation of the curable composition of Example 39.

### (Example 41)

A sheet for evaluation was prepared, and the evaluation thereof was conducted in a same manner as Example 39 except that 5 g of Nip Seal SS-50A of ingredient (G) was added in the formulation of the curable composition of Example 39.

### (Example 42)

A sheet for evaluation was prepared, and the evaluation thereof was conducted in a same manner as Example 39 except that ingredient (G) was not added in the formulation of the curable composition of Example 39.

### (Example 43)

A sheet for evaluation was prepared, and the evaluation thereof was conducted in a same manner as Example 39 except that 5 g of silica with pH of 4.0 (trade name: Aerosil R974, manufactured by Nihon Aerosil) was added instead of the ingredient (G) in the formulation of the curable composition of Example 39.

The formulations of the above curable compositions of Examples 39 to 43, and the results of evaluation of their cured materials are shown in Table 10.

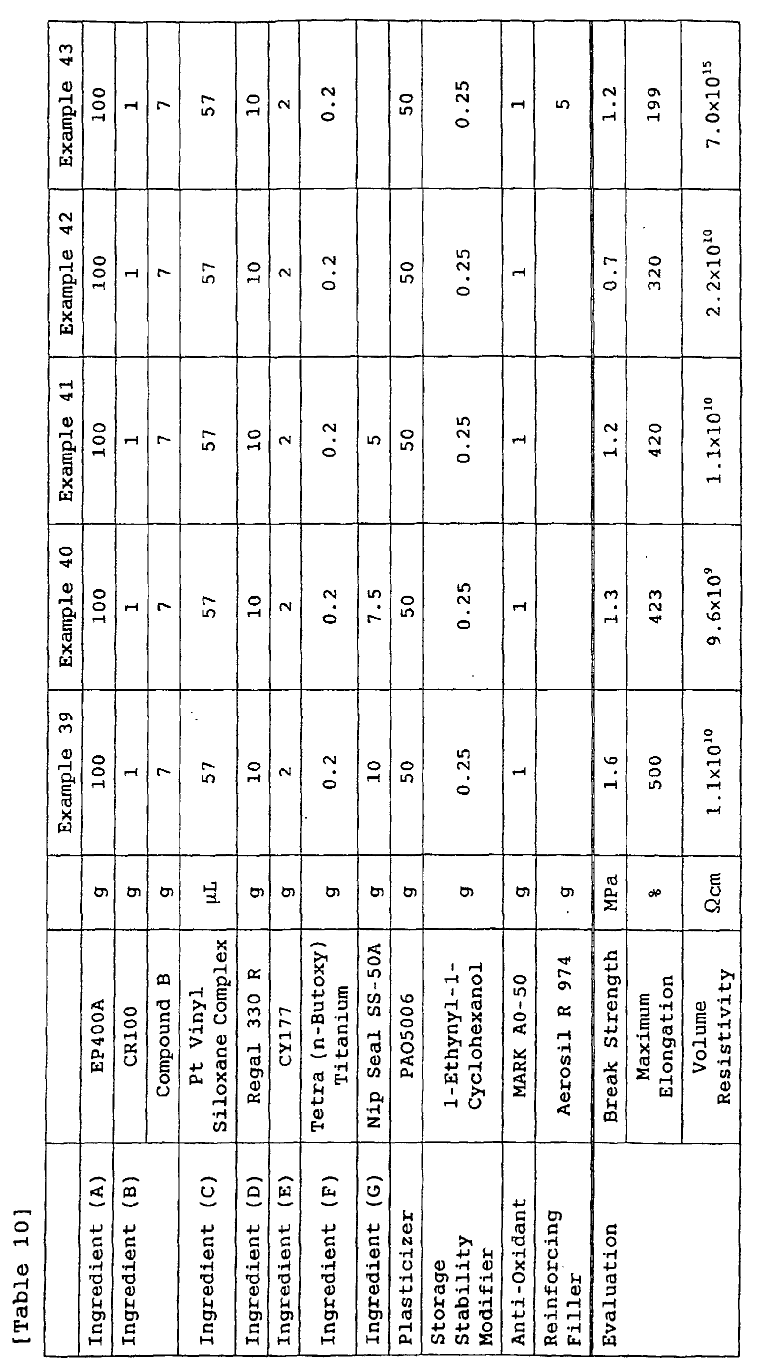

As apparent from Table 10, by adding silica with pH equal to or greater than 5, provided with hydrophobicity, to the curable composition of the present invention, a conductive material excellent in both conductive and mechanical properties can be obtained, compared to a conductive material obtained from a curable composition with no silica filler added thereto, and a conductive material obtained from a curable composition with silica of pH below 5 added thereto.

### (Example 44)

As ingredient (A), Epion EP 400A (manufactured by Kaneka Corporation, allyl terminated polyisobutylene, molecular weight: 10000) was used as in the case of Example 1. To 300 g of this ingredient (A), 30 g of Regal 330 R (manufactured by Cabot Co., Ltd.) as ingredient (D), 150 g of PAO 5006 (manufactured by Idemitsu Chemical Co., Ltd.) as a plasticizer, and 3 g of MARK AO-50 (manufactured by Asahi Denka Co., Ltd.) as an anti-oxidant were added, and were kneaded three times by a roller. Then, to this mixture, 6 g of CY 177 (manufactured by Chiba Specialty Chemicals Co., Ltd., epoxy resin) was added as ingredient (E) and mixed sufficiently, and 0.6 g of tetra (n-butoxy) titanium was further added as ingredient (F) and mixed sufficiently, and was heated in an oven at 50°C for 1 hour. Then, to this mixture, 7.8 g of CR 100 (manufactured by Kaneka Corporation, polyorganohydrogensiloxane) as ingredient (B), 15 g of Compound B having the structure expressed by the above described Formula (9), 170 µL of bis (1, 3-divinyl-1, 1, 3, 3-tetramethyl disiloxane) platinum complex catalyst (content of platinum: 3 wt%, xylene solution) as ingredient (C), and 0.7 g of 1-ethynyl-1-cyclohexanol as a storage stability modifier were added and mixed uniformly. The composition was heated in an oven for 1 hour, and was thereafter degassed by a vacuum degassing and stirring apparatus (manufactured by C. TEC Co., Ltd.) for 2 hours. The obtained composition was put into a mold for roller molding at an injection pressure of 1 MPa, and was heated at 150°C for 30 minutes to produce a conductive roller having a conductive elastic layer with thickness of 3 mm and length of 230 mm provided around a stainless shaft with a diameter of 8 mm. For the obtained roller, the roller resistance was measured with a voltage of 100 V applied to the roller at 23°C and 55% relative humidity.

### (Example 45)

A conductive roller was produced, and its roller resistance was measured in a same manner as Example 44 except that 27 g of Regal 330 R (manufactured by Cabot Co., Ltd.) and 3 g of #30 (manufactured by Mitsubishi Chemical Co., Ltd.) were used as ingredient (D), and 0.6 g of KR-TTS (manufactured by Ajinomoto Fine Techno Co., Ltd., organotitanium compound) was used as ingredient (F) in the formulation of the curable composition of Example 44.

### (Example 46)

As ingredient (A), Epion EP 400A (manufactured by Kaneka Corporation, allyl terminated polyisobutylene, molecular weight: 10000) was used. To 300 g of this ingredient (A), 33 g of Regal 330 R (manufactured by Cabot Co., Ltd.) as ingredient (D), 15 g of Nip Seal SS-50A (manufactured by Nihon Silica Kogyo Co., Ltd., silica provided with hydrophobicity, Ph = 7.9) as ingredient (G), 150 g of PAO 5006 (manufactured by Idemitsu Chemical Co., Ltd.) as a plasticizer, and 3 g of MARK AO-50 (manufactured by Asahi Denka Co., Ltd.) as an anti-oxidant were added, and were kneaded three times by a roller. Then, to this mixture, 6 g of CY 177 (manufactured by Chiba Specialty Chemicals Co., Ltd., epoxy resin) was added as ingredient (E) and mixed sufficiently, and 0.6 g of tetra (n-butoxy) titanium was further added as ingredient (F) and mixed sufficiently, and was heated in an oven at 50°C for 1 hour. Then, to this mixture, 7.8 g of CR 100 (manufactured by Kaneka Corporation, polyorganohydrogensiloxane) as ingredient (B), 15 g of Compound B having the structure expressed by the above described Formula (9), 170 µL of bis (1, 3-divinyl-1, 1, 3, 3-tetramethyl disiloxane) platinum complex catalyst (content of platinum: 3 wt%, xylene solution) as ingredient (C), and 0.7 g of 1-ethynyl-1-cyclohexanol as a storage stability modifier were added and mixed uniformly. This mixture was heated in an oven at 50°C for 1 hour, and was thereafter degassed by a vacuum degassing and stirring apparatus (manufactured by C. TEC Co., Ltd.) for 2 hours. The obtained composition was put into a mold for roller molding at an injection pressure of 1 MPa, and was heated at 150°C for 30 minutes to produce a conductive roller having a conductive elastic layer with thickness of 3 mm and length of 230 mm provided around a stainless shaft with a diameter of 8 mm. For the obtained roller, the roller resistance was measured with a voltage of 100 V applied to the roller at 23°C and 55% relative humidity.

### (Example 47)

ACX 004-N (manufactured by Kaneka Corporation, allyl terminated polyoxypropylene, molecular weight: 9000) was used as ingredient (A). To 300 g of this ingredient (A), 24 g of MA 220 (manufactured by Mitsubishi Chemical Co., Ltd.) was added as ingredient (D), and was kneaded three times by a roll. Then, to this mixture, 6 g of Epiol BE 200 (manufactured by NOF Corporation, epoxy resin) was added as ingredient (E) and mixed sufficiently, and 0.6 g of tetra (n-butoxy) titanium was further added as ingredient (F) and mixed sufficiently, and was heated in an oven at 50°C for 1 hour. Then, to this mixture, 20 g of ACX 004-C (manufactured by Kaneka Corporation-, polyorganohydrogensiloxane) as ingredient (B), 150 µL of bis (1, 3-divinyl-1, 1, 3, 3-tetramethyl disiloxane) platinum complex catalyst (content of platinum: 3 wt%, xylene solution) as ingredient (C), and 0.4 g of 1-ethynyl-1-cyclohexanol as a storage stability modifier were added and mixed uniformly. This mixture was heated in an oven at 50°C for 1 hour, and was thereafter degassed by a vacuum degassing and stirring apparatus (manufactured by C. TEC Co., Ltd.) for 2 hours. The obtained composition was put into a mold for roller molding at an injection pressure of 1 MPa, and was heated at 150°C for 30 minutes to produce a conductive roller having a conductive elastic layer with thickness of 3 mm and length of 230 mm provided around a stainless shaft with a diameter of 8 mm. For the obtained roller, the roller resistance was measured with a voltage of 100 V applied to the roller at 23°C and 55% relative humidity.

### (Example 48)

A conductive roller was produced, and its roller resistance was measured in a same manner as Example 47 except that 15 g of #3030 B (manufactured by Mitsubishi Chemical Co., Ltd.) was used as ingredient (D) in the formulation of the curable composition of Example 47.

The formulations of the above curable compositions of Examples 44 to 48, and the results of evaluation of their cured materials are shown in Table 11.

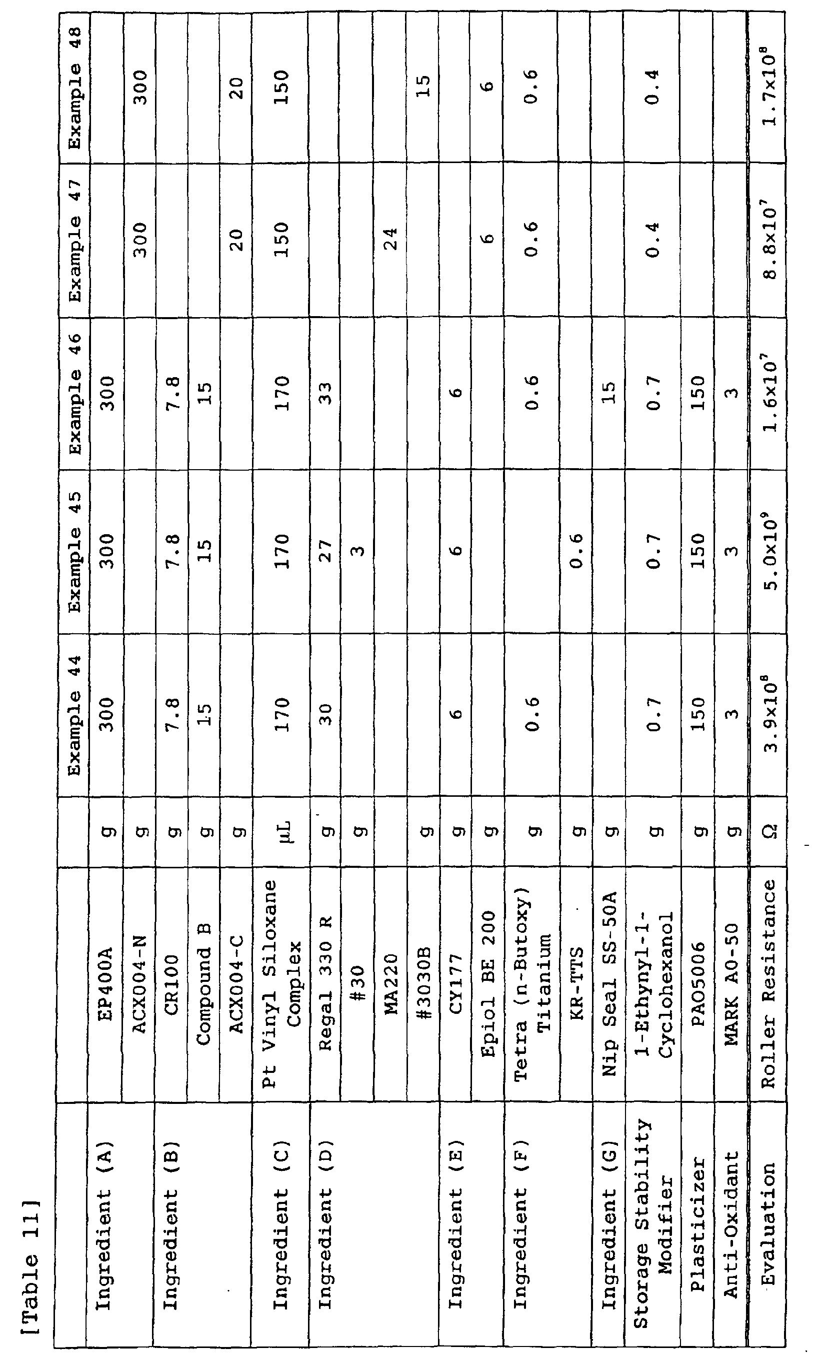

Examples of the conductive drum of the present invention will now be described, and in these Examples, as a sleeve of the conductive drum was used an article prepared by lathing an aluminum pipe element with a length of 248 mm and an outer diameter of 32 mm in sections close to the ends of the element, press-fitting in these lathed sections flanges each having a rotation axis , and lathing and polishing the surface of the aluminum pipe element to finish the same with the tolerance of ±0.01 mm or smaller and diametral variation accuracy of 0.01 mm with respect to the rotation axis, and primer-treating the finished surface. Furthermore, the above described diametral variation accuracy refers to a difference between the maximum value and the minimum value of the distance between the central axis and the outer periphery.

### (Example 49)

As ingredient (A), Epion EP 400A (manufactured by Kaneka Corporation, allyl terminated polyisobutylene, molecular weight: 10000) was used. To 300 g of this ingredient (A), 30 g of Regal 330 R (manufactured by Cabot Co., Ltd.) as ingredient (D), 150 g of PAO 5006 (manufactured by Idemitsu Chemical Co., Ltd.) as a plasticizer, and 3 g of MARK AO-50 (manufactured by Asahi Denka Co., Ltd.) as an anti-oxidant were added, and were kneaded three times by a roller. Then, to this mixture, 6 g of CY 177 (manufactured by Chiba Specialty Chemicals Co., Ltd., epoxy resin) was added as ingredient (E) and mixed sufficiently, and 0.6 g of tetra (n-butoxy) titanium was further added as ingredient (F) and mixed sufficiently, and was heated in an oven at 50°C for 1 hour. Then, to this mixture, 7.8 g of CR 100 (manufactured by Kaneka Corporation, polyorganohydrogensiloxane) as ingredient (B), 15 g of Compound B having the structure expressed by the above described Formula (9), 170 µL of bis (1, 3-divinyl-1, 1, 3, 3-tetramethyl disiloxane) platinum complex catalyst (content of platinum: 3 wt%, xylene solution) as ingredient (C), and 0.7 g of 1-ethynyl-1-cyclohexanol as a storage stability modifier were added and mixed uniformly. The composition was heated in an oven at 50°C for 1 hour, and was thereafter degassed by a vacuum degassing and stirring apparatus (manufactured by C. TEC Co., Ltd.) for 2 hours. The obtained composition was put into a mold with the above described sleeve placed therein at an injection pressure of 1 MPa, and the mold was heated at 140°C for 30 minutes to cure the composition, thereby producing a conductive drum having a conductive elastic layer with thickness of about 5 mm provided on the outer periphery of the sleeve. For the obtained drum, the drum resistance was measured with a voltage of 100 V applied to the drum at 23°C and 55% relative humidity.

### (Example 50)

As ingredient (A), ACX 004-N (manufactured by Kaneka Corporation, allyl terminated polyoxypropylene, molecular weight: 9000) was used. To 300 g of this ingredient (A), 15 g of #3030 B (manufactured by Mitsubishi Chemical Co., Ltd.) was added as ingredient (D), and was kneaded three times by a roll. Then, to this mixture, 6 g of Epiol BE 200 (manufactured by NOF Corporation, epoxy resin) was added as ingredient (E) and mixed sufficiently, and thereafter 0.6 g of tetra (n-butoxy) titanium was further added thereto as ingredient (F) and mixed sufficiently, and was heated in an oven at 50°C for 1 hour. Then, 20 g of ACX 004-C (manufactured by Kaneka Corporation, polyorganohydrogensiloxane) as ingredient (B), 150 µL of bis (1, 3-divinyl-1, 1, 3, 3-tetramethyl disiloxane) platinum complex catalyst (content of platinum: 3 wt%, xylene solution) as ingredient (C), and 0.4 g of 1-ethynyl-1-cyclohexanol as a storage stability modifier were added and mixed uniformly. This mixture was heated in an oven at 50°C for 1 hour, and was thereafter degassed by a vacuum degassing and stirring apparatus (manufactured by C. TEC Co., Ltd.) for 2 hours. The obtained composition was put into a mold with the above described sleeve placed therein at an injection pressure of 1 MPa, and the mold was heated at 140°C for 30 minutes to cure the composition, thereby producing a conductive drum having a conductive elastic layer with thickness of about 5 mm provided on the outer periphery of the sleeve. For the obtained drum, the drum resistance was measured with a voltage of 100 V applied to the drum at 23°C and 55% relative humidity.

The formulations of the above curable compositions of Examples 49 and 50, and the results of evaluation of their cured materials are shown in Table 12.

**[Table 12]**

| | | | Example 49 | Example 50 |
|---|---|---|---|---|
| Ingredient (A) | EP400A | g | 300 | |
| | ACX004-N | g | | 300 |
| Ingredient (B) | CR100 | g | 7.8 | |
| | Compound B | g | 15 | |
| | ACX004-C | g | | 20 |
| Ingredient (C) | Pt Vinyl Siloxane Complex | µL | 170 | 150 |
| Ingredient (D) | Regal 330 R | g | 30 | |
| | #3030B | g | | 15 |
| Ingredient (E) | CY177 | g | 6 | |
| | Epiol BE 200 | g | | 6 |
| Ingredient (F) | Tetra (n-Butoxy) Titanium | g | 0.6 | 0.6 |
| Storage Modifier | 1-Ethynyl-1-Cyclohexanol | g | 0.7 | 0.4 |
| Plasticizer | PAO5006 | g | 150 | |
| Anti-Oxidant | MARK A0-50 | g | 3 | |
| Evaluation | Drum Resistance | Ω | 3×10⁸ | 7.5×10⁷ |

For the curable composition of the present invention, the surface of carbon black serving as a conductivity imparter is treated by the integral method at the time when the composition is mixed, whereby the conductivity of the conductive material obtained by heat-curing this curable composition is regulated, and therefore the surface treatment can be conducted conveniently only by mixture of the composition without providing a specific surface treatment apparatus and steps for achieving the purpose of surface treatment, thus bringing about a significant advantage in terms of costs. Also, the curable composition of the present invention is capable of being cured very quickly, and thus is advantageous in conducting line production, because it is cured by the addition reaction of the Si-H group using a precious metal catalyst. Therefore, the curable composition of the present invention can suitably be used as a material for producing conductive rollers and conductive drums for electronic photograph such as a charging roller, developing roller, transfer roller, paper feeding roller, cleaning roller, fixing press roller and intermediate transfer drum.

## Claims

1. A curable composition comprising as essential ingredients the following ingredients (A) to (F):
(A) an organic polymer having per molecule at least one alkenyl group capable of undergoing hydrosilylation;
(B) a compound having at least two hydrosilyl groups per molecule;
(C) a hydrosilylation catalyst;
(D) carbon black;
(E) at least one compound selected from the group consisting of epoxidized compounds, acid anhydride compounds and ester compounds; and
(F) an organotitanium compound and/or an organoaluminum compound.

2. The curable composition according to claim 1, wherein an amount of silicon coupled hydrogen atom of ingredient (B) is in the range of 0.5 to 5.0 equivalent with respect to a total amount of alkenyl group of ingredient (A) for the added amount of ingredient (B), an added amount of ingredient (C) is in the range of from 10⁻¹ to 10⁻⁸ mol with respect to 1 mol of alkenyl group of the organic polymer of ingredient (A), an added amount of ingredient (D) is in the range of from 0.1 to 200 parts by weight with respect to 100 parts by weight of organic polymer of ingredient (A), an added amount of ingredient (E) is in the range of from 0.1 to 200 parts by weight with respect to 100 parts by weight of carbon black of the (D) ingredient, and an added amount of ingredient (F) is in the range of from 0.01 to 100 parts by weight with respect to 100 parts by weight of carbon black of the (D) ingredient.

3. The curable composition according to claim 1 or 2, wherein the organic polymer of ingredient (A) having per molecule at least two alkenyl groups capable of undergoing hydrosilylation.

4. The curable composition according to any of claims 1 to 3, wherein the organic polymer of ingredient (A) having at the end of the molecule the alkenyl group capable of undergoing hydrosilylation.

5. The curable composition according to any of claims 1 to 4, wherein the organic polymer of ingredient (A) is a saturated hydrocarbon based polymer.

6. The curable composition according to claim 5, wherein the saturated hydrocarbon based polymer of ingredient (A) is an isobutylene based polymer.

7. The curable composition according to claim 5 or 6, wherein a number average molecular weight of the saturated hydrocarbon based polymer of ingredient (A) is in the range of from 1000 to 50000.

8. The curable composition according to any of claims 1 to 4, wherein the organic polymer of ingredient (A) is an oxyalkylene based polymer.

9. The curable composition according to claim 8, wherein the oxyalkylene based polymer of ingredient (A) is an oxypropylene based polymer.

10. The curable composition according to claim 8 or 9, wherein the number average molecular weight of the oxyalkylene based polymer of ingredient (A) is in the range of from 500 to 50000.

11. The curable composition according to any of claims 1 to 10, wherein the compound of ingredient (B) is polyorganohydrogensiloxane.

12. The curable composition according to any of claims 1 to 11, wherein a specific surface area of the carbon black of ingredient (D) is 200 m²/g or smaller.

13. The curable composition according to any of claims 1 to 12, wherein the carbon black of ingredient (D) is at least two types of carbon black of different specific surface areas and/or particle sizes.

14. The curable composition according to any of claims 1 to 13, wherein the compound of ingredient (E) is a compound having an oxyalkylene unit in the molecule.

15. The curable composition according to any of claims 1 to 14, wherein the compound of ingredient (E) is an epoxidized compound having per molecule 0.6 to 1.2 epoxy groups on average.

16. A curable composition with hydrophobic silica added as ingredient (G) to the curable composition according to any of claims 1 to 15.

17. The curable composition according to claim 16, wherein the hydrophobic silica of ingredient (G) is silica with pH of 5 or larger.

18. The curable composition according to any of claims 1 to 15, wherein said curable composition produced in such a manner that ingredients (A), (D), (E) and (F) are mixed to treat the surface of the carbon black of ingredient (D) with ingredients (E) and (F) by the integral blending method, followed by adding thereto ingredients (B) and (C).

19. The curable composition according to claim 16 or 17, wherein said curable composition produced in such a manner that ingredients (A), (D), (E), (F) and (G) are mixed to treat the surface of the carbon black of ingredient (D) with ingredients (E) and (F) by the integral blending method, followed by adding thereto ingredients (B) and (C).

20. A conductive roller in which a conductive elastic layer obtained by curing the curable composition according to any of claims 1 to 19 is provided around a conductive shaft.

21. The conductive roller according to claim 20, wherein a roller resistance measured with a direct voltage of 100 V applied to the roller at 23°C and 55% relative humidity is in the range of from 10⁶ to 10¹⁰ Ω.

22. A conductive drum in which a conductive elastic layer obtained by curing the curable composition according to any of claims 1 to 19 is provided around a cylindrical conductive sleeve.

23. The conductive drum according to claim 22, wherein a drum resistance measured with a direct voltage of 100 V applied to the drum at 23°C and 55% relative humidity is in the range of from 10⁶ to 10¹⁰ Ω.
